# EUROPEAN PATENT APPLICATION

(11) **EP 4 661 498 A1**
(43) Date of publication of application: **10.12.2025**
(21) Application number: 24814571.6
(22) Date of filing: 31.05.2024
(51) Int. Cl.: H04W 36/00

(54) **METHOD AND APPARATUS FOR INFORMATION INDICATION IN BTM**

(30) Priority: 31.05.2023 CN 202310638067
(71) Applicant: Huawei Technologies Co., Ltd., Shenzhen, Guangdong 518129 (CN)
(72) Inventor: ZHAO, Yue, Shenzhen, Guangdong 518129 (CN); GAN, Ming, Shenzhen, Guangdong 518129 (CN)
(74) Representative: Maiwald GmbH
(86) International application number: PCT/CN2024/096543
(87) International publication number: WO 2024/245376

(57) **Abstract**

This application relates to an information indication method in BTM and an apparatus. The method includes: An AP MLD generates and sends a BTM request frame. The BTM request frame includes first indication information indicating treatment for a BSSID or an AP MLD not listed in a BSS transition candidate list entries field, and treatment for an AP not present in a recommended AP set in a candidate target AP MLD listed in the BSS transition candidate list entries field. According to this application, an information indication in the BTM can be improved. This application is applied to a WLAN system that supports a 802.11 series protocol such as a next-generation Wi-Fi protocol of 802.11ax like 802.11be, Wi-Fi 7, or EHT, a next generation of 802.11be like Wi-Fi 8 or UHR, or Wi-Fi AI. This application is further applied to a WPAN system, a sensing system, and the like that support UWB.

## Description

This application claims priority to Chinese Patent Application No. 202310638067.7, filed with the China National Intellectual Property Administration on May 31, 2023 and entitled "INFORMATION INDICATION METHOD IN BTM AND APPARATUS", which is incorporated herein by reference in its entirety.

### TECHNICAL FIELD

This application relates to the field of wireless communication technologies, and in particular, to an information indication method in basic service set (basic service set, BSS) transition management (BSS transition management, BTM) and an apparatus.

### BACKGROUND

With development of wireless communication technologies, more wireless communication devices support multi-link (multi-link, ML) communication, for example, simultaneous communication on 2.4 GHz, 5 GHz, and 6 GHz frequency bands, or simultaneous communication on different channels of a same frequency band. This improves a communication rate between devices. Such a device is usually referred to as a multi-link device (multi-link device, MLD). The multi-link device usually includes one or more affiliated stations, and each affiliated station works on one frequency band, one channel, or one link. If all stations inside an MLD are access points (access point, AP), the MLD may be further referred to as an AP MLD. If all stations inside an MLD are non-access point stations (non-access point station, non-AP STA), the MLD may be further referred to as a non-AP MLD.

Currently, when accessing a local area network, a station needs to belong to a basic service set (basic service set, BSS). In some scenarios, for example, in a roaming scenario, a non-AP STA needs to exit a current BSS and join a new BSS. If the non-AP STA supports a basic service set transition management (BTM) function, the function can be used to help implement BSS transition. In a BTM process, an AP may send a BSS transition management request (BSS transition management request, BTM request) frame to a to-be-disassociated non-AP STA, to notify the non-AP STA that the AP is to be disassociated (disassociated) from the non-AP STA. In addition, information about an AP around the non-AP STA may be added to the BTM request frame, to help the non-AP STA select a new BSS.

In the conventional technology, an AP MLD may also provide information about an AP MLD around a non-AP MLD for the non-AP MLD via a BTM request frame, to help the non-AP MLD select a new AP MLD for association. However, for BSS transition between the non-AP MLD and the AP MLD, an information indication in existing BTM is incomplete.

### SUMMARY

Embodiments of this application provide an information indication method in BTM and apparatus, to improve an information indication in the BTM, so that a non-AP MLD is clearer about an attitude of an AP MLD and

The following describes this application from different aspects. It should be understood that, for the following implementations and beneficial effect of different aspects, refer to each other.

According to a first aspect, this application provides an information indication method in BTM. The method includes: An AP MLD generates and sends a BTM request frame. The BTM request frame includes a BSS transition candidate list entries field and a request mode field, the request mode field includes first indication information, and the first indication information indicates treatment for a basic service set identifier (BSS identifier, BSSID) or an AP MLD not present in the BSS transition candidate list entries field, and treatment for an AP not present in any recommended AP set in a candidate target AP MLD listed in the BSS transition candidate list entries field.

In this application, the BSSID may be used to identify one BSS or one AP. The BSS transition candidate list entries field includes one or more neighbor report elements. One neighbor report element may be used to carry (or describe) a preference of one target BSS candidate or candidate target AP MLD. Different neighbor report elements may carry preferences of different AP sets (AP sets) in a same candidate target AP MLD, and different neighbor report elements may alternatively carry preferences of different target BSS candidates or candidate target AP MLDs. Therefore, "a candidate target AP MLD listed in the BSS transition candidate list entries field" may refer to the candidate target AP MLD corresponding to the neighbor report element of the BSS transition candidate list entries field.

For frame formats of the BTM request frame, the BSS transition candidate list entries field, the neighbor report element, and the like, refer to the following descriptions. Details are not described herein.

In this application, the first indication information is carried in the request mode field of the BTM request frame, and indicates the treatment for the BSSID or the AP MLD not present in the BSS transition candidate list entries field, and the treatment for the AP not present in the any recommended AP set in the candidate target AP MLD listed in the BSS transition candidate list entries field. This improves an information indication in the BTM, clarifies the treatment for the AP in the MLD, and makes a non-AP MLD more aware of an attitude of the AP MLD and behavior of the non-AP MLD.

According to a second aspect, this application provides an information indication method in BTM. The method includes: A non-AP MLD receives and parses a BTM request frame. The BTM request frame includes a BSS transition candidate list entries field and a request mode field, the request mode field includes first indication information, and the first indication information indicates treatment for a BSSID or an AP MLD not present in the BSS transition candidate list entries field, and treatment for an AP not present in any recommended AP set in a candidate target AP MLD listed in the BSS transition candidate list entries field.

According to a third aspect, this application provides a communication apparatus. The communication apparatus may be an AP MLD, or a chip, a functional module, or the like configured in an AP MLD. The communication apparatus includes a processing unit and a transceiver unit. The processing unit is configured to generate a BTM request frame, and the transceiver unit is configured to send or output the BTM request frame. The BTM request frame includes a BSS transition candidate list entries field and a request mode field, the request mode field includes first indication information, and the first indication information indicates treatment for a BSSID or an AP MLD not present in the BSS transition candidate list entries field, and treatment for an AP not present in any recommended AP set in a candidate target AP MLD listed in the BSS transition candidate list entries field.

According to a fourth aspect, this application provides a communication apparatus. The communication apparatus may be a non-AP MLD, or a chip, a functional module, or the like configured in a non-AP MLD. The communication apparatus includes a transceiver unit and a processing unit. The transceiver unit is configured to receive or input a BTM request frame, and the processing unit is configured to parse the BTM request frame. The BTM request frame includes a BSS transition candidate list entries field and a request mode field, the request mode field includes first indication information, and the first indication information indicates treatment for a BSSID or an AP MLD not present in the BSS transition candidate list entries field, and treatment for an AP not present in any recommended AP set in a candidate target AP MLD listed in the BSS transition candidate list entries field.

In a possible implementation of any one of the foregoing aspects, the first indication information is an abridged field (abridged field).

Optionally, a length of the abridged field is 1 bit.

Optionally, when the abridged field is of a first value, the abridged field indicates that a sender (that is, the AP MLD) of the BTM request frame has no recommendation for or against association of a recipient (that is, the non-AP MLD) of the BTM request frame with the BSSID or the AP MLD not present in the BSS transition candidate list entries field, and the AP not present in the any recommended AP set in the candidate target AP MLD present in the BSS transition candidate list entries field. When the abridged field is of a second value, the abridged field indicates that the sender (that is, the AP MLD) of the BTM request frame excludes or objects to the association of the recipient (that is, the non-AP MLD) of the BTM request frame with the BSSID or the AP MLD not present in the BSS transition candidate list entries field, and the AP not present in the any recommended AP set in the candidate target AP MLD present in the BSS transition candidate list entries field.

For example, the first value is 0, and the second value is 1. Alternatively, the first value is 1, and the second value is 0.

In this application, a meaning of the abridged field is extended, so that the abridged field can indicate both the treatment for the BSSID or the AP MLD not present in the BSS transition candidate list entries field, and the treatment for the AP not present in the candidate target AP MLD listed in the BSS transition candidate list entries field. The meaning is clear, no extra overheads are increased, and compatibility is good.

In a possible implementation of any one of the foregoing aspects, a BSS transition candidate preference subelement of the BSS transition candidate list entries field includes a preference (preference) field. For example, an existing meaning may continue to be used as a meaning of the preference field, or a meaning of the preference field may change with evolution of a standard. This is not limited in this application. Alternatively, the preference field may indicate a recommendation degree of an AP set. The AP set may be an AP set recommended by a neighbor report element to which the preference field belongs. In other words, the AP set is a recommended AP set in a candidate target AP MLD listed in the BSS transition candidate list entries field. A larger value of the preference field indicates a higher recommendation degree.

In this application, the meaning of the preference field may be further changed, so that the neighbor report element can indicate a recommendation degree of an AP set in the AP MLD when recommending the AP set.

In a possible implementation of any one of the foregoing aspects, the first indication information is an abridged field and an abridged extension field. The abridged field indicates the treatment for the BSSID or the AP MLD not present in the BSS transition candidate list entries field. The abridged extension field indicates the treatment for the AP not present in the any recommended AP set in the candidate target AP MLD listed in the BSS transition candidate list entries field.

Optionally, a length of the abridged extension field is 1 bit. For example, 1 reserved bit in the request mode field may be used as the abridged extension field.

Optionally, when the abridged extension field is of a third value, the abridged extension field indicates that a sender (that is, the AP MLD) of the BTM request frame has no recommendation for or against association of a recipient (that is, the non-AP MLD) of the BTM request frame with the AP not present in the any recommended AP set in the candidate target AP MLD present in the BSS transition candidate list entries field. When the abridged extension field is of a fourth value, the abridged extension field indicates that the sender (that is, the AP MLD) of the BTM request frame excludes or objects to the association of the recipient (that is, the non-AP MLD) of the BTM request frame with the AP not present in the any recommended AP set in the candidate target AP MLD present in the BSS transition candidate list entries field.

For example, the third value is 0, and the fourth value is 1. Alternatively, the third value is 1, and the fourth value is 0.

In this application, the abridged extension field is added to the request mode field to indicate the treatment for the AP not present in the candidate target AP MLD listed in the BSS transition candidate list entries field. Logic is clear, to facilitate understanding by the non-AP MLD. In addition, the added bit and the existing abridged field are present at the same time, and the logic is clean.

According to a fifth aspect, this application provides an information indication method in BTM. The method includes: An AP MLD generates and sends a BTM request frame. The BTM request frame includes a BSS transition candidate list entries field and a request mode field, the request mode field includes an abridged field, and the abridged field indicates treatment for a BSSID or an AP MLD not present in the BSS transition candidate list entries field, and treatment for an AP set that is not recommended in a candidate target AP MLD listed in the BSS transition candidate list entries field.

The "AP set" may include one or more APs. In other words, a single AP may also be used as one AP set, and all APs affiliated with one AP MLD may also be used as one AP set. For a meaning of "an AP set that is not recommended in a candidate target AP MLD listed in the BSS transition candidate list entries field", refer to the descriptions in the following Embodiment 3. Details are not described herein.

In this embodiment of this application, a meaning of the abridged field is extended to indicate both the treatment for the BSSID or the AP MLD not present in the BSS transition candidate list entries field, and the treatment for the AP set that is not recommended in the candidate target AP MLD listed in the BSS transition candidate list entries field. An information indication in the BTM is improved, and the treatment for the AP set that is not recommended in the MLD is clarified, so that a non-AP MLD is clearer about an attitude of the AP MLD and behavior of the non-AP MLD. In addition, the meaning is clear, no additional overheads are increased, and compatibility is good.

According to a sixth aspect, this application provides an information indication method in BTM. The method includes: A non-AP MLD receives and parses a BTM request frame. The BTM request frame includes a BSS transition candidate list entries field and a request mode field, the request mode field includes an abridged field, and the abridged field indicates treatment for a BSSID or an AP MLD not present in the BSS transition candidate list entries field, and treatment for an AP set that is not recommended in a candidate target AP MLD listed in the BSS transition candidate list entries field.

According to a seventh aspect, this application provides a communication apparatus. The communication apparatus may be an AP MLD, or a chip, a functional module, or the like configured in an AP MLD. The communication apparatus includes a processing unit and a transceiver unit. The processing unit is configured to generate a BTM request frame, and the transceiver unit is configured to send or output the BTM request frame. The BTM request frame includes a BSS transition candidate list entries field and a request mode field, the request mode field includes an abridged field, and the abridged field indicates treatment for a BSSID or an AP MLD not present in the BSS transition candidate list entries field, and treatment for an AP set that is not recommended in a candidate target AP MLD listed in the BSS transition candidate list entries field.

According to an eighth aspect, this application provides a communication apparatus. The communication apparatus may be a non-AP MLD, or a chip, a functional module, or the like configured in a non-AP MLD. The communication apparatus includes a transceiver unit and a processing unit. The transceiver unit is configured to receive or input a BTM request frame, and the processing unit is configured to parse the BTM request frame. The BTM request frame includes a BSS transition candidate list entries field and a request mode field, the request mode field includes an abridged field, and the abridged field indicates treatment for a BSSID or an AP MLD not present in the BSS transition candidate list entries field, and treatment for an AP set that is not recommended in a candidate target AP MLD listed in the BSS transition candidate list entries field.

With reference to any one of the fifth aspect to the eighth aspect, in a possible implementation, a length of the abridged field is 1 bit. When the abridged field is of a first value, the abridged field indicates that a sender (that is, the AP MLD) of the BTM request frame has no recommendation for or against association of a recipient (that is, the non-AP MLD) of the BTM request frame with the BSSID or the AP MLD not present in the BSS transition candidate list entries field, and the AP set that is not recommended in the candidate target AP MLD present in the BSS transition candidate list entries field. When the abridged field is of a second value, the abridged field indicates that the sender (that is, the AP MLD) of the BTM request frame excludes or objects to the association of the recipient (that is, the non-AP MLD) of the BTM request frame with the BSSID or the AP MLD not present in the BSS transition candidate list entries field, and the AP set that is not recommended in the candidate target AP MLD present in the BSS transition candidate list entries field.

For example, the first value is 0, and the second value is 1. Alternatively, the first value is 1, and the second value is 0.

With reference to any one of the fifth aspect to the eighth aspect, in a possible implementation, a BSS transition candidate preference subelement of the BSS transition candidate list entries field includes a preference field. For example, an existing meaning may continue to be used as a meaning of the preference field, or a meaning of the preference field may change with evolution of a standard. This is not limited in this application. Alternatively, the preference field may indicate a recommendation degree of an AP set. The AP set may be an AP set recommended by a neighbor report element to which the preference field belongs. In other words, the AP set is a recommended AP set in a candidate target AP MLD listed in the BSS transition candidate list entries field. A larger value of the preference field indicates a higher recommendation degree.

In this application, the meaning of the preference field may be further changed, so that the neighbor report element can indicate a recommendation degree of an AP set in the AP MLD when recommending the AP set.

According to a ninth aspect, this application provides an information indication method in BTM. The method includes: An AP MLD generates and sends a BTM request frame. The BTM request frame includes a BSS transition candidate list entries field, the BSS transition candidate list entries field includes one or more neighbor report elements, and one neighbor report element is used to carry information about one candidate target AP MLD. Each neighbor report element includes one piece of second indication information, and the second indication information indicates treatment for an AP not present in an AP set in the candidate target AP MLD carried in the neighbor report element to which the second indication information belongs. Because one neighbor report element corresponds to one candidate target AP MLD, the second indication information may be briefly described as: indicating treatment for an AP not present in an AP set in a candidate target AP MLD.

It may be understood that the "AP set" may include one or more APs. In other words, a single AP may also be used as one AP set, and all APs affiliated with one AP MLD may also be used as one AP set.

In this application, the second indication information is carried in the neighbor report element, to indicate treatment for an AP not present in an AP set in a single candidate target AP MLD, so that there can be treatment for each recommended AP set, and this is flexible for use.

According to a tenth aspect, this application provides an information indication method in BTM. The method includes: A non-AP MLD receives and parses a BTM request frame. The BTM request frame includes a BSS transition candidate list entries field, the BSS transition candidate list entries field includes one or more neighbor report elements, and one neighbor report element is used to carry information about one candidate target AP MLD. Each neighbor report element includes one piece of second indication information, and the second indication information indicates treatment for an AP not present in an AP set in the candidate target AP MLD carried in the neighbor report element to which the second indication information belongs.

According to an eleventh aspect, this application provides a communication apparatus. The communication apparatus may be an AP MLD, or a chip, a functional module, or the like configured in an AP MLD. The communication apparatus includes a processing unit and a transceiver unit. The processing unit is configured to generate a BTM request frame, and the transceiver unit is configured to send or output the BTM request frame. The BTM request frame includes a BSS transition candidate list entries field, the BSS transition candidate list entries field includes one or more neighbor report elements, and one neighbor report element is used to carry information about one candidate target AP MLD. The neighbor report element includes second indication information, and the second indication information indicates treatment for an AP not present in an AP set in the candidate target AP MLD carried in the neighbor report element to which the second indication information belongs.

According to a twelfth aspect, this application provides a communication apparatus. The communication apparatus may be a non-AP MLD, or a chip, a functional module, or the like configured in a non-AP MLD. The communication apparatus includes a transceiver unit and a processing unit. The transceiver unit is configured to receive or input a BTM request frame, and the processing unit is configured to parse the BTM request frame. The BTM request frame includes a BSS transition candidate list entries field, the BSS transition candidate list entries field includes one or more neighbor report elements, and one neighbor report element is used to carry information about one candidate target AP MLD. The neighbor report element includes second indication information, and the second indication information indicates treatment for an AP not present in an AP set in the candidate target AP MLD carried in the neighbor report element to which the second indication information belongs.

With reference to any one of the ninth aspect to the twelfth aspect, in a possible implementation, when the second indication information is of a first value, the second indication information indicates that a sender (that is, the AP MLD) of the BTM request frame has no recommendation for or against association of a recipient (that is, the non-AP MLD) of the BTM request frame with the AP not present in the AP set in the candidate target AP MLD carried in the neighbor report element to which the second indication information belongs. When the second indication information is of a second value, the second indication information indicates that the sender (that is, the AP MLD) of the BTM request frame excludes or objects to the association of the recipient (that is, the non-AP MLD) of the BTM request frame with the AP not present in the AP set in the candidate target AP MLD carried in the neighbor report element to which the second indication information belongs.

For example, the first value is 0, and the second value is 1. Alternatively, the first value is 1, and the second value is 0.

With reference to any one of the ninth aspect to the twelfth aspect, in a possible implementation, the second indication information is carried in a BSS transition candidate preference subelement of the neighbor report element.

For example, because the existing BSS transition candidate preference subelement is not extensible, a length of a preference field may be shortened, so that the length of the preference field is less than or equal to 7 bits, but a meaning of the preference field is not changed (for example, the preference field indicates a recommendation degree of the candidate target AP MLD carried in the neighbor report element to which the preference field belongs). 1 bit or more bits saved by shortening the preference field represent the second indication information. In other words, the preference field of the BSS transition candidate preference subelement is less than or equal to 7 bits, a bit length of the second indication information is greater than or equal to 1 bit, and a sum of the length of the preference field and the bit length of the second indication information is less than or equal to 1 octet (8 bits). It may be understood that the meaning of the preference field is not limited in this implementation, and only the length of the preference field is changed. The meaning of the preference field may further change with evolution of a standard.

In this application, the second indication information is carried in the BSS transition candidate preference subelement of the neighbor report element, to indicate the treatment for the AP not present in the AP set in the candidate target AP MLD carried in the neighbor report element. There can be treatment for each recommended AP set in the candidate target AP MLD, and this is flexible for use. In addition, the second indication information and a preference value are used at the same time, that is, the second indication information is not present when the neighbor report element is not used for recommendation.

With reference to any one of the ninth aspect to the twelfth aspect, in a possible implementation, the second indication information is carried in a BSSID information field of the neighbor report element. For example, 1 reserved bit in the BSSID information field may be used as the second indication information.

In this application, the 1 reserved bit is used in the BSSID information field of the neighbor report element, to indicate the treatment for the AP not present in the AP set in the candidate target AP MLD carried in the neighbor report element. There can be treatment for each recommended AP set in the candidate target AP MLD, and this is flexible for use.

According to a thirteenth aspect, this application provides an information indication method in BTM. The method includes: An AP MLD generates and sends a BTM request frame. The BTM request frame includes a BSS transition candidate list entries field, the BSS transition candidate list entries field includes one or more neighbor report elements, and one neighbor report element is used to carry information about one candidate target AP MLD. One neighbor report element includes a per-STA profile subelement (per-STA profile subelement) of any AP that is not excluded in one candidate target AP MLD. One per-STA profile subelement corresponds to one AP that is not excluded in the candidate target AP MLD. Herein, "not excluded" may include at least two meanings: "recommended" and "no recommendation for or against".

In addition, in this application, it is further considered by default that an AP not present in the neighbor report element is excluded from association. Herein, "an AP not present in the neighbor report element" may refer to an AP that is in the candidate target AP MLD carried in the neighbor report element and that is other than an AP indicated by a BSSID field and the AP corresponding to the per-STA profile subelement.

In this application, a meaning of an AP set carried in the neighbor report element is modified, so that the AP not present in the neighbor report element is excluded from association by default in this application. This improves an information indication in the BTM, and makes a non-AP MLD clearer about an attitude of the AP MLD and behavior of the non-AP MLD.

According to a fourteenth aspect, this application provides an information indication method in BTM. The method includes: A non-AP MLD receives and parses a BTM request frame. The BTM request frame includes a BSS transition candidate list entries field, the BSS transition candidate list entries field includes one or more neighbor report elements, and one neighbor report element is used to carry information about one candidate target AP MLD. One neighbor report element includes a per-STA profile subelement of any AP that is not excluded in one candidate target AP MLD. One per-STA profile subelement corresponds to one AP that is not excluded in the candidate target AP MLD. Herein, "not excluded" may include at least two meanings: "recommended" and "no recommendation for or against".

According to a fifteenth aspect, this application provides a communication apparatus. The communication apparatus may be an AP MLD, or a chip, a functional module, or the like configured in an AP MLD. The communication apparatus includes a processing unit and a transceiver unit. The processing unit is configured to generate a BTM request frame, and the transceiver unit is configured to send or output the BTM request frame. The BTM request frame includes a BSS transition candidate list entries field, the BSS transition candidate list entries field includes one or more neighbor report elements, and one neighbor report element is used to carry information about one candidate target AP MLD. One neighbor report element includes a per-STA profile subelement of any AP that is not excluded in one candidate target AP MLD. One per-STA profile subelement corresponds to one AP that is not excluded in the candidate target AP MLD. Herein, "not excluded" may include at least two meanings: "recommended" and "no recommendation for or against".

According to a sixteenth aspect, this application provides a communication apparatus. The communication apparatus may be a non-AP MLD, or a chip, a functional module, or the like configured in a non-AP MLD. The communication apparatus includes a transceiver unit and a processing unit. The transceiver unit is configured to receive or input a BTM request frame, and the processing unit is configured to parse the BTM request frame. The BTM request frame includes a BSS transition candidate list entries field, the BSS transition candidate list entries field includes one or more neighbor report elements, and one neighbor report element is used to carry information about one candidate target AP MLD. One neighbor report element includes a per-STA profile subelement of any AP that is not excluded in one candidate target AP MLD. One per-STA profile subelement corresponds to one AP that is not excluded in the candidate target AP MLD. Herein, "not excluded" may include at least two meanings: "recommended" and "no recommendation for or against".

With reference to any one of the thirteenth aspect to the sixteenth aspect, in a possible implementation, each per-STA profile subelement further includes third indication information, and the third indication information indicates treatment for an AP corresponding to the per-STA profile subelement.

Optionally, when the third indication information is of a first value, the third indication information indicates that a sender (that is, the AP MLD) of the BTM request frame has no recommendation for or against association of a recipient (that is, the non-AP MLD) of the BTM request frame with the AP corresponding to the per-STA profile subelement. When the third indication information is of a second value, the third indication information indicates that the sender (that is, the AP MLD) of the BTM request frame recommends the association of the recipient (that is, the non-AP MLD) of the BTM request frame with the AP corresponding to the per-STA profile subelement. For example, the first value is 0, and the second value is 1. Alternatively, the first value is 1, and the second value is 0.

In this application, the AP not present in the neighbor report element is excluded from association by default, and the third indication information specifies whether the AP that is present and that corresponds to the per-STA profile subelement is recommended for association. Because association preference information is present in a per-STA profile subelement corresponding to each AP, there can be treatment for each AP in each AP set provided by the AP MLD, and this is very flexible for use.

With reference to any one of the thirteenth aspect to the sixteenth aspect, in a possible implementation, the third indication information is carried in a STA control (STA control) field of the per-STA profile subelement. For example, 1 reserved bit in the STA control field of the per-STA profile subelement may be used as the third indication information.

According to a seventeenth aspect, this application provides a communication apparatus. The communication apparatus is an AP MLD, and the communication apparatus includes a processor, configured to perform the method according to the first aspect, the fifth aspect, the ninth aspect, the thirteenth aspect, or any one of the possible implementations of the first aspect, the fifth aspect, the ninth aspect, or the thirteenth aspect. Alternatively, the processor is configured to execute a program stored in a memory. When the program is executed, the method according to the first aspect, the fifth aspect, the ninth aspect, the thirteenth aspect, or any one of the possible implementations of the first aspect, the fifth aspect, the ninth aspect, or the thirteenth aspect is performed.

With reference to the seventeenth aspect, in a possible implementation, the memory is located outside the communication apparatus.

With reference to the seventeenth aspect, in a possible implementation, the memory is located inside the communication apparatus.

In this application, the processor and the memory may alternatively be integrated into one device. In other words, the processor and the memory may alternatively be integrated together.

With reference to the seventeenth aspect, in a possible implementation, the communication apparatus further includes a transceiver, and the transceiver is configured to send a BTM request frame.

According to an eighteenth aspect, this application provides a communication apparatus. The communication apparatus is a non-AP MLD, and the communication apparatus includes a processor, configured to perform the method according to the second aspect, the sixth aspect, the tenth aspect, the fourteenth aspect, or any one of the possible implementations of the second aspect, the sixth aspect, the tenth aspect, or the fourteenth aspect. Alternatively, the processor is configured to execute a program stored in a memory. When the program is executed, the method according to the second aspect, the sixth aspect, the tenth aspect, the fourteenth aspect, or any one of the possible implementations of the second aspect, the sixth aspect, the tenth aspect, or the fourteenth aspect is performed.

With reference to the eighteenth aspect, in a possible implementation, the memory is located outside the communication apparatus.

With reference to the eighteenth aspect, in a possible implementation, the memory is located inside the communication apparatus.

In this application, the processor and the memory may alternatively be integrated into one device. In other words, the processor and the memory may alternatively be integrated together.

With reference to the eighteenth aspect, in a possible implementation, the communication apparatus further includes a transceiver, and the transceiver is configured to receive a BTM request frame.

According to a nineteenth aspect, an embodiment of this application provides a communication apparatus. The communication apparatus includes a logic circuit and an interface, the logic circuit is coupled to the interface, and the interface is configured to input and/or output information. The logic circuit is configured to perform the method according to the first aspect, the fifth aspect, the ninth aspect, the thirteenth aspect, or any one of the possible implementations of the first aspect, the fifth aspect, the ninth aspect, or the thirteenth aspect.

According to a twentieth aspect, an embodiment of this application provides a communication apparatus. The communication apparatus includes a logic circuit and an interface, the logic circuit is coupled to the interface, and the interface is configured to input and/or output information. The logic circuit is configured to perform the method according to the second aspect, the sixth aspect, the tenth aspect, the fourteenth aspect, or any one of the possible implementations of the second aspect, the sixth aspect, the tenth aspect, or the fourteenth aspect.

According to a twenty-first aspect, an embodiment of this application provides a computer-readable storage medium. The computer-readable storage medium is configured to store a computer program, and when the computer program is run on a computer, the method according to the first aspect, the fifth aspect, the ninth aspect, the thirteenth aspect, or any one of the possible implementations of the first aspect, the fifth aspect, the ninth aspect, or the thirteenth aspect is enabled to be performed.

According to a twenty-second aspect, an embodiment of this application provides a computer-readable storage medium. The computer-readable storage medium is configured to store a computer program, and when the computer program is run on a computer, the method according to the second aspect, the sixth aspect, the tenth aspect, the fourteenth aspect, or any one of the possible implementations of the second aspect, the sixth aspect, the tenth aspect, or the fourteenth aspect is enabled to be performed.

According to a twenty-third aspect, an embodiment of this application provides a computer program product. The computer program product includes a computer program or computer code, and when the computer program product runs on a computer, the method according to the first aspect, the fifth aspect, the ninth aspect, the thirteenth aspect, or any one of the possible implementations of the first aspect, the fifth aspect, the ninth aspect, or the thirteenth aspect is enabled to be performed.

According to a twenty-fourth aspect, an embodiment of this application provides a computer program product. The computer program product includes a computer program or computer code, and when the computer program product runs on a computer, the method according to the second aspect, the sixth aspect, the tenth aspect, the fourteenth aspect, or any one of the possible implementations of the second aspect, the sixth aspect, the tenth aspect, or the fourteenth aspect is enabled to be performed.

According to a twenty-fifth aspect, an embodiment of this application provides a computer program. When the computer program is run on a computer, the method according to the first aspect, the fifth aspect, the ninth aspect, the thirteenth aspect, or any one of the possible implementations of the first aspect, the fifth aspect, the ninth aspect, or the thirteenth aspect is enabled to be performed.

According to a twenty-sixth aspect, an embodiment of this application provides a computer program. When the computer program is run on a computer, the method according to the second aspect, the sixth aspect, the tenth aspect, the fourteenth aspect, or any one of the possible implementations of the second aspect, the sixth aspect, the tenth aspect, or the fourteenth aspect is enabled to be performed.

According to a twenty-seventh aspect, an embodiment of this application provides a communication system. The communication system includes an AP MLD and a non-AP MLD. The AP MLD is configured to perform the method according to the first aspect, the fifth aspect, the ninth aspect, the third aspect, or any one of the possible implementations of the first aspect, the fifth aspect, the ninth aspect, or the third aspect. The non-AP MLD is configured to perform the method according to the second aspect, the sixth aspect, the tenth aspect, the fourteenth aspect, or any one of the possible implementations of the second aspect, the sixth aspect, the tenth aspect, or the fourteenth aspect.

For technical effect achieved by the foregoing aspects, refer to each other or technical effect in the following method embodiments. Details are not described herein again.

### BRIEF DESCRIPTION OF DRAWINGS

FIG. 1a is a diagram of an architecture of a wireless communication system according to an embodiment of this application;
FIG. 1b is a diagram of another architecture of a wireless communication system according to an embodiment of this application;
FIG. 2a is a diagram of communication between a multi-link device and another device according to an embodiment of this application;
FIG. 2b is another diagram of communication between a multi-link device and another device according to an embodiment of this application;
FIG. 3 is a diagram of an application scenario according to an embodiment of this application;
FIG. 4 is a diagram of a frame format of an action field of a BTM request frame according to an embodiment of this application;
FIG. 5 is a diagram of a frame format of a neighbor report element according to an embodiment of this application;
FIG. 6 is a diagram of a frame format of a basic multi-link subelement according to an embodiment of this application;
FIG. 7 is a diagram of a frame format of a BSS transition candidate preference subelement according to an embodiment of this application;
FIG. 8 is a diagram of a frame format of a request mode field according to an embodiment of this application;
FIG. 9 is a first schematic flowchart of an information indication method in BTM according to an embodiment of this application;
FIG. 10 is a second schematic flowchart of an information indication method in BTM according to an embodiment of this application;
FIG. 11 is a diagram of another frame format of a request mode field according to an embodiment of this application;
FIG. 12 is a third schematic flowchart of an information indication method in BTM according to an embodiment of this application;
FIG. 13 is a fourth schematic flowchart of an information indication method in BTM according to an embodiment of this application;
FIG. 14 is a diagram of a frame format of a BSSID information field according to an embodiment of this application;
FIG. 15 is a diagram of another frame format of a BSS transition candidate preference subelement according to an embodiment of this application;
FIG. 16 is a fifth schematic flowchart of an information indication method in BTM according to an embodiment of this application;
FIG. 17 is a diagram of a frame format of a STA control field according to an embodiment of this application;
FIG. 18 is a sixth schematic flowchart of an information indication method in BTM according to an embodiment of this application;
FIG. 19 is a diagram of a structure of a communication apparatus according to an embodiment of this application;
FIG. 20 is a diagram of another structure of a communication apparatus according to an embodiment of this application; and
FIG. 21 is a diagram of still another structure of a communication apparatus according to an embodiment of this application.

### DESCRIPTION OF EMBODIMENTS

The following clearly and completely describes the technical solutions in embodiments of this application with reference to the accompanying drawings in embodiments of this application.

In descriptions of this application, unless otherwise specified, "/" means "or". For example, A/B may mean A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. "At least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c. a, b, and c may be singular or plural.

In the descriptions of this application, terms such as "first" and "second" do not limit a quantity and an execution sequence, and the terms such as "first" and "second" do not indicate a definite difference. In addition, the terms "including", "having", and any other variant thereof are intended to cover a non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

In this application, the term "example", "for example", or the like represents giving an example, an illustration, or a description. Any embodiment or design scheme described with "example", "in an example", or "for example" in this application should not be explained as being more preferred or having more advantages than another embodiment or design scheme. Exactly, use of the term "example", "in an example", "for example", or the like is intended to present a related concept in a specific manner.

In this application, an element represented in a singular form is intended to represent "one or more", but does not represent "one and only one", unless otherwise specified.

A technical goal of development and evolution of a cellular network and a wireless local area network (wireless local area network, WLAN) is to continuously increase a throughput. WLAN protocols are mainly discussed in the Institute of Electrical and Electronics Engineers (institute of electrical and electronics engineers, IEEE) 802.11 standard group. In previous standards such as 802.11a/b/g/n/ac/ax, the throughput has been continuously improved. A next-generation standard of IEEE 802.11be is referred to as an extremely high throughput (extremely high throughput, EHT), and significantly improving a peak throughput is a most important technical goal of the next-generation standard IEEE 802.11be. To achieve the technical goal of the extremely high throughput, a multi-link (multi-link, ML) is used as one of key technologies in the next-generation standard of IEEE 802.11 be. A core idea of the next-generation standard of IEEE 802.11be includes that a WLAN device that supports the next-generation standard of IEEE 802.11 has multi-band (multi-band) sending and receiving capabilities. In this way, larger bandwidth can be used for data transmission, thereby significantly improving the throughput.

A plurality of frequency bands include but are not limited to a 2.4 GHz Wi-Fi frequency band, a 5 GHz Wi-Fi frequency band, and a 6 GHz Wi-Fi frequency band. One link means that access and transmission are performed on each frequency band. Therefore, a multi-link (multi-link, ML) means that access and transmission are performed on the plurality of frequency bands. The multi-link helps reduce a delay and improve robustness.

A multi-link device includes one or more affiliated stations, and the affiliated station may be a logical station. "A multi-link device includes an affiliated station" is also briefly described as "a multi-link device includes a station" in embodiments of this application. Each affiliated station may work on one frequency band, one channel, or one link. The affiliated station may be an AP or a non-AP STA. A multi-link device whose affiliated station is an AP may be referred to as an AP multi-link device (AP multi-link device, AP MLD), and a multi-link device whose affiliated station is a non-AP STA may be referred to as a non-AP multi-link device (non-AP multi-link device, non-AP MLD).

During data transmission between a multi-link device (for example, the AP MLD) and another multi-link device (the non-AP MLD), a link identifier may be used to identify one link or a station on one link. Before communication is performed, the two multi-link devices (for example, the AP MLD and the non-AP MLD) may first perform negotiation or communication on a correspondence between the link identifier (link identifier, link ID) and the link or the station on the link. Alternatively, the AP MLD may indicate the correspondence between the link identifier and the link or the station on the link via a broadcast management frame like a beacon (beacon) frame. Therefore, during data transmission, the link identifier is carried without a need to transmit a large amount of signaling information to indicate the link or the station on the link. This reduces signaling overheads and improves transmission efficiency.

In a possible implementation, the multi-link device may implement wireless communication in compliance with the 802.11 series protocols, for example, in compliance with an extremely high throughput (EHT), or in compliance with 802.11be or compatible with 802.11be, to implement communication with another device. Certainly, the another device may be a multi-link device, or may not be a multi-link device.

The technical solutions provided in this application may be applied to a WLAN system like Wi-Fi. For example, the method provided in this application may be applicable to IEEE 802.11 series protocols, for example, a next-generation Wi-Fi protocol of 802.11ax like 802.11be, Wi-Fi 7, or EHT; or a next generation of 802.11be like Wi-Fi 8, ultra high reliability (ultra high reliability, UHR), ultra high reliability and throughput (ultra high reliability and throughput, UHRT), or Wi-Fi AI. Examples are not enumerated herein. The technical solutions provided in this application may be further applied to an ultra-wideband (ultra-wideband, UWB)-based wireless personal area network (wireless personal area network, WPAN) system, a sensing sensing system, and the like. For example, the method provided in this application may be applicable to IEEE 802.15 series protocols such as the 802.15.4a protocol, the 802.15.4z protocol, the 802.15.4ab protocol, or a future-generation UWB WPAN protocol. Examples are not enumerated herein. The technical solutions provided in this application may be further applied to the following communication system, for example, an Internet of things (internet of things, IoT) system, vehicle-to-everything (vehicle-to-everything, V2X), a narrowband Internet of things (narrowband internet of things, NB-IoT) system, a device used in an Internet of vehicles, an Internet of things node, a sensor, and the like in an Internet of things (IoT), a smart camera, a smart remote control, a smart water meter, and a smart electricity meter in a smart household, a sensor in a smart city, and the like. Alternatively, this application is further applicable to a long term evolution (long term evolution, LTE) system, a 5th-generation (5th-generation, 5G) communication system, a new communication system emerging in future communication development, and the like.

Although this application is mainly described by using a network in which IEEE 802.11 is deployed as an example, a person skilled in the art easily understands that various aspects of this application may be expanded to other networks that use various standards or protocols, for example, a high performance radio LAN (high performance radio LAN, HIPERLAN) (which is a wireless standard that is similar to the IEEE 802.11 standard, and is mainly used in Europe), a wide area network (wide area network, WAN), a wireless local area network (WLAN), a personal area network (personal area network, PAN), or another known or later developed network.

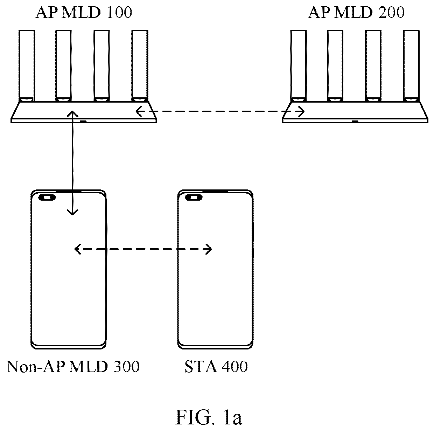

FIG. 1a is a diagram of an architecture of a wireless communication system according to an embodiment of this application. As shown in FIG. la, the wireless communication system includes at least two AP MLDs (for example, an AP MLD 100 and an AP MLD 200 in FIG. 1a) and at least one non-AP MLD (for example, a non-AP MLD 300 in FIG. 1a). Optionally, FIG. 1a may further include a legacy station (for example, a single-link non-AP STA 400 in FIG. 1a, also referred to as a STA 400) supporting transmission only on a single link. The AP MLD is a device that provides a service for the non-AP MLD, and the non-AP MLD may communicate with the AP MLD through a plurality of links, to increase a throughput. A STA in the non-AP MLD may also communicate with an AP in the AP MLD on a link. It may be understood that, in FIG. 1a, an example in which the non-AP MLD is a mobile phone and the AP MLD is a router indicates no limitation on types of the AP MLD and the non-AP MLD in this application. It may be further understood that quantities of AP MLDs and non-AP MLDs in FIG. 1a are merely examples, and there may be more or fewer AP MLDs or non-AP MLDs in the wireless communication system. This is not limited in this application.

In embodiments of this application, the term "communication" may also be described as "data transmission", "information transmission", or "transmission". The term "transmission" may generally refer to sending and receiving.

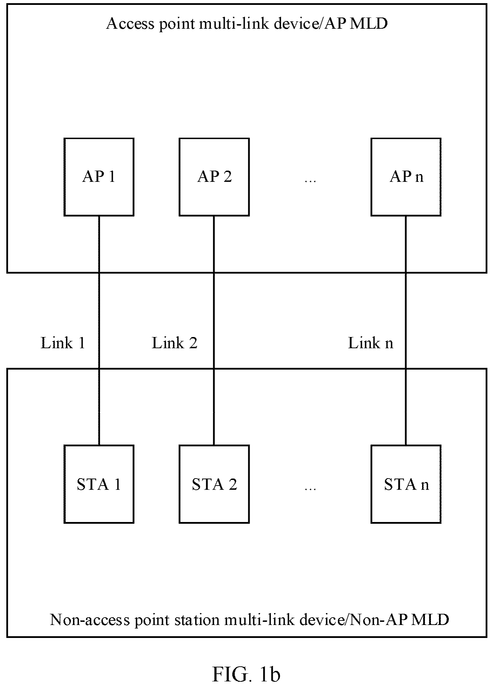

FIG. 1b is a diagram of another architecture of a wireless communication system according to an embodiment of this application. As shown in FIG. 1b, an AP MLD includes n stations: an AP 1, an AP 2, ..., and an AP n; and a non-AP MLD also includes n stations: a STA 1, a STA 2, ..., and a STA n. Herein, n is a positive integer. Communication between MLDs is multi-link communication. In FIG. 1b, a link 1 to a link n form a multi-link. In other words, the AP MLD and the non-AP MLD may perform parallel communication through the link 1, the link 2, ..., and the link n. An AP in the AP MLD may set up a link with a STA in the non-AP MLD. For example, the STA 1 in the non-AP MLD sets up the link 1 with the AP 1 of the AP MLD, the STA 2 in the non-AP MLD sets up the link 2 with the AP 2 of the AP MLD, the STAn in the non-AP MLD sets up the link n with the AP n of the AP MLD, and the like. For example, a multi-link device in embodiments of this application may be a single-antenna device, or may be a multi-antenna device. For example, the multi-link device may be a device with more than two antennas. A quantity of antennas included in the multi-link device is not limited in embodiments of this application.

Frequency bands on which the multi-link device works may include but are not limited to sub-1 GHz, 2.4 GHz, 5 GHz, 6 GHz, and a high-frequency 60 GHz.

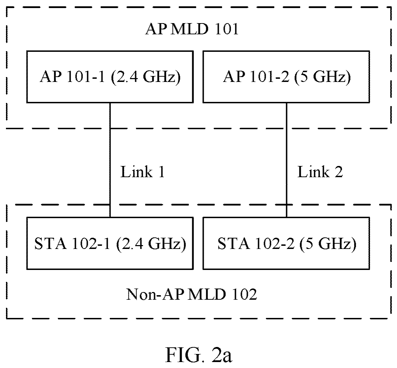

FIG. 2a is a diagram of communication between a multi-link device and another device according to an embodiment of this application. For example, FIG. 2a shows a scenario in which an AP MLD 101 communicates with a non-AP MLD 102. The AP MLD 101 includes an affiliated AP 101-1 and an affiliated AP 101-2, the non-AP MLD 102 includes an affiliated STA 102-1 and an affiliated STA 102-2, and the AP MLD 101 and the non-AP MLD 102 perform parallel communication through a link 1 and a link 2.

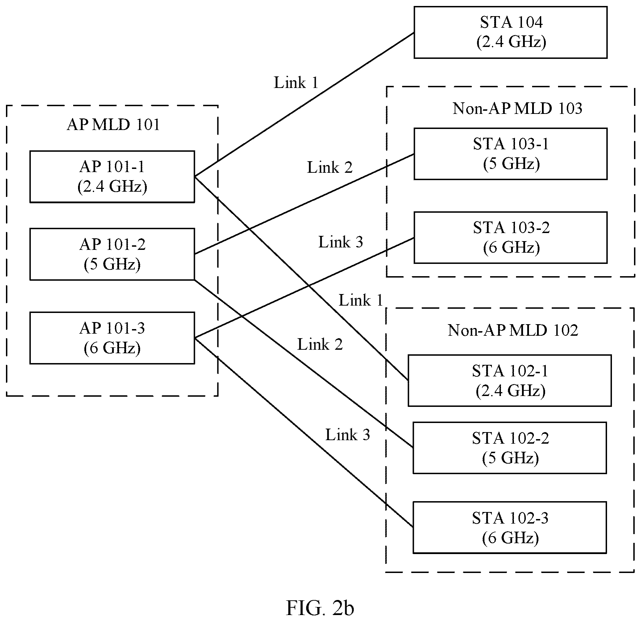

FIG. 2b is another diagram of communication between a multi-link device and another device according to an embodiment of this application. For example, FIG. 2b shows a scenario in which the AP MLD 101 communicates with the non-AP MLD 102, a non-AP MLD 103, and a STA 104. The AP MLD 101 includes the affiliated AP 101-1 to an affiliated AP 101-3. The non-AP MLD 102 includes three affiliated stations: the STA 102-1, the STA 102-2, and a STA 102-3. The non-AP MLD 103 includes two affiliated stations: a STA 103-1 and a STA 103-2. The STA 104 is a single-link device. The AP MLD 101 may separately communicate with the non-AP MLD 102 through the link 1, the link 2, and a link 3, communicate with the non-AP MLD 103 through the link 2 and the link 3, and communicate with the STA 104 through the link 1. In an example, the STA 104 works on a 2.4 GHz frequency band. In the non-AP MLD 103, the STA 103-1 works on a 5 GHz frequency band, and the STA 103-2 works on a 6 GHz frequency band. In the non-AP MLD 102, the STA 102-1 works on the 2.4 GHz frequency band, the STA 102-2 works on the 5 GHz frequency band, and the STA 102-3 works on the 6 GHz frequency band. The AP 101-1 operating on the 2.4 GHz frequency band in the AP MLD 101 may transmit uplink or downlink data to the STA 104 and the STA 102-1 in the non-AP MLD 102 through the link 1. The AP 101-2 operating on the 5 GHz frequency band in the AP MLD 101 may transmit uplink or downlink data to the STA 103-1 operating on the 5 GHz frequency band in the non-AP MLD 103 through the link 2, and may further transmit uplink or downlink data to the STA 102-2 operating on the 5 GHz frequency band in the non-AP MLD 102 through the link 2. The AP 101-3 operating on the 6 GHz frequency band in the AP MLD 101 may transmit uplink or downlink data to the STA 102-3 operating on the 6 GHz frequency band in the non-AP MLD 102 through the link 3, and may further transmit uplink or downlink data to the STA 103-2 in the non-AP MLD through the link 3.

FIG. 2a shows that the AP MLD supports only two frequency bands, and FIG. 2b shows only an example in which the AP MLD 101 supports the three frequency bands (2.4 GHz, 5 GHz, and 6 GHz), each frequency band corresponds to one link, and the AP MLD 101 may work on one or more links of the link 1, the link 2, or the link 3. In practical applications, the AP MLD and the non-AP MLD may further support more or fewer frequency bands, that is, the AP MLD and the non-AP MLD may work on more links or fewer links. This is not limited in embodiments of this application. FIG. 2a and FIG. 2b are merely simple diagrams, and do not constitute any limitation on the protection scope of embodiments of this application. It may be understood that, for descriptions of an 802.11 physical layer (physical layer, PHY) and a medium access control (medium access control, MAC) layer in the multi-link device, refer to related standards, protocols, or the like. Details are not shown one by one in embodiments of this application.

For example, the multi-link device (which may be the non-AP MLD or the AP MLD herein) may be an apparatus with a wireless communication function. The apparatus may be an integrated device, or may be a chip, a processing system, or the like installed in the integrated device. A device on which the chip or processing system is installed may implement, under control of the chip or processing system, the methods and functions provided in embodiments of this application. For example, in embodiments of this application, the non-AP MLD has a wireless transceiver function, may support the 802.11 series protocols, and may communicate with an AP MLD, a single-link device, or another non-AP MLD. For example, the non-AP MLD is any user communication device that allows a user to communicate with an AP and further communicate with a WLAN. For example, the non-AP MLD may be user equipment that can connect to a network, for example, a tablet computer, a desktop computer, a laptop computer, a notebook computer, an ultra-mobile personal computer (ultra-mobile personal computer, UMPC), a handheld computer, a netbook, a personal digital assistant (personal digital assistant, PDA), or a mobile phone, an Internet of things node in an Internet of things, a vehicle-mounted communication apparatus in an Internet of vehicles, or the like. The non-AP MLD may alternatively be a chip and a processing system in the foregoing terminals. The AP MLD may be an apparatus that provides a service for the non-AP MLD, and may support the 802.11 series protocols. For example, the AP MLD may be a communication entity, for example, a communication server, a router, a switch, or a bridge, or the AP MLD may include a macro base station, a micro base station, a relay station, and the like in various forms. Certainly, the AP MLD may alternatively be a chip and a processing system in the devices in the various forms. In this way, the method and functions in embodiments of this application are implemented. The 802.11 protocol may be a protocol that supports 802.11be or is compatible with 802.11be.

It may be understood that the multi-link device may support high-rate and low-latency transmission. With continuous evolution of application scenarios of a wireless local area network, the multi-link device may be further used in more scenarios, for example, a sensor node (for example, a smart water meter, a smart electricity meter, or a smart air detection node) in a smart city, a smart device (for example, a smart camera, a projector, a display, a television, a stereo, a refrigerator, or a washing machine) in a smart home, a node in an Internet of things, an entertainment terminal (for example, wearable devices such as an AR device and a VR device), a smart device (for example, a printer or a projector) in a smart office, an Internet of vehicles device in an Internet of vehicles, and some infrastructures (for example, a vending machine, a self-service navigation station of a supermarket, a self-service cash register device, or a self-service ordering machine) in daily life scenarios. Specific forms of the non-AP MLD and the AP MLD are not limited in embodiments of this application. The foregoing devices are merely examples for description herein.

The following briefly describes an application scenario in embodiments of this application.

A basic service set (BSS) is a basic module of an IEEE 802.11 local area network and includes a plurality of STAs. Member STAs of different types of BSSs form different topology structures. For example, a special STA in an infrastructure basic service set (infrastructure BSS) acts as a role for accessing a distributed system (distributed system, DS), and the STA is referred to as an access point station (AP STA), which is usually referred to as an AP for short. Another STA is referred to as a non-AP STA, all non-AP STAs are associated with the AP to access the DS, and the non-AP STAs are not connected to each other. In an independent basic service set (independent BSS), all STAs have a same role, and the STAs may be connected to each other. The local area network uses hierarchical management. To be specific, when two STAs interact with each other, data transmitted by a STA 1 is transmitted from a BSS 1 to a BSS 2 through the DS, and finally arrives at a STA 2. Therefore, when accessing the local area network, the STA needs to belong to a BSS.

For the infrastructure BSS, in some scenarios, the non-AP STA needs to disconnect from the currently associated AP and re-associate with a new AP, that is, the non-AP STA needs to exit the current BSS and join the new BSS. Therefore, a basic service set transition management (BSS transition management, BTM) function is proposed, and is applicable to the infrastructure BSS. If the non-AP STA supports the BTM function, the function can be used to help implement BSS transition. For example, the AP may send a BSS transition management request (BSS transition management request, BTM request) frame to a to-be-disassociated non-AP STA, to notify the non-AP STA that the AP is to be disassociated (disassociated) from the non-AP STA. In addition, information about an AP around the non-AP STA may be added to the BTM request frame, to help the non-AP STA selects the new BSS.

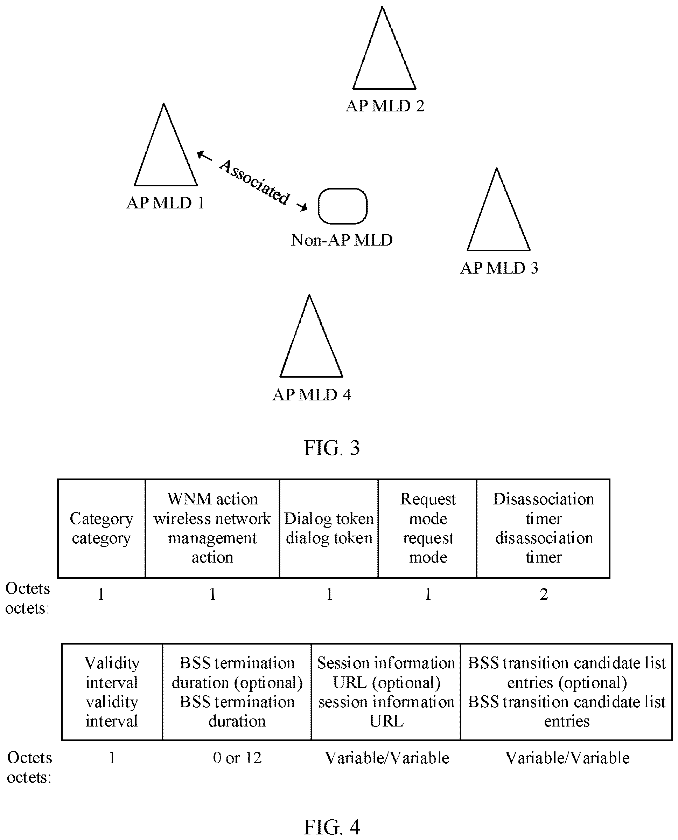

A BSS transition procedure between an AP and a non-AP STA not affiliated with any MLD has been clarified in an existing technical solution. It may be understood that, for a multi-link device (MLD), there is also a scenario in which a non-AP MLD needs to disassociate (disassociate) from a currently associated AP MLD and re-associate with a new AP MLD. For example, FIG. 3 is a diagram of an application scenario according to an embodiment of this application. As shown in FIG. 3, there are four AP MLDs near a non-AP MLD: an AP MLD 1, an AP MLD 2, an AP MLD 3, and an AP MLD 4. It is assumed that the current non-AP MLD is associated with the AP MLD 1. However, the non-AP MLD is to be disassociated from the AP MLD 1. Therefore, the non-AP MLD needs to select one of the remaining three AP MLDs (the AP MLD 2, the AP MLD 3, and the AP MLD 4) for reassociation. When the non-AP MLD performs selection, the currently associated AP MLD 1 may provide recommendation.

This application mainly focuses on BSS transition between the non-AP MLD and the AP MLD.

In a possible implementation, the AP MLD may provide, via the BTM request frame, the non-AP MLD with information about AP MLDs around the non-AP MLD, and provide recommendation degrees of the AP MLDs. FIG. 4 is a diagram of a frame format of an action field of a BTM request frame according to an embodiment of this application. The action (action) field of the BTM request frame may be used to carry management information of the BTM request frame. As shown in FIG. 4, the action field of the BTM request frame may include but is not limited to a BSS transition candidate list entries (BSS transition candidate list entries) field and a request mode (request mode) field. Several fields are specifically described in the following.

The BSS transition candidate list entries field may include one or more neighbor report elements (neighbor report elements). The neighbor report element may be used to describe (or carry) a preference degree of a target BSS candidate (target BSS candidate) or a preference degree of a candidate target AP MLD. Usually, one neighbor report element may correspond to one target BSS candidate or one candidate target AP MLD. Different neighbor report elements may correspond to a same candidate target AP MLD, or may correspond to different candidate target AP MLDs.

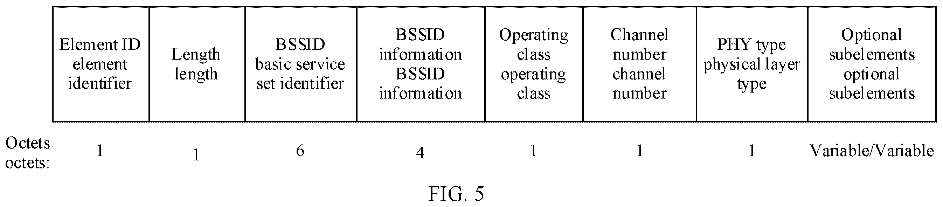

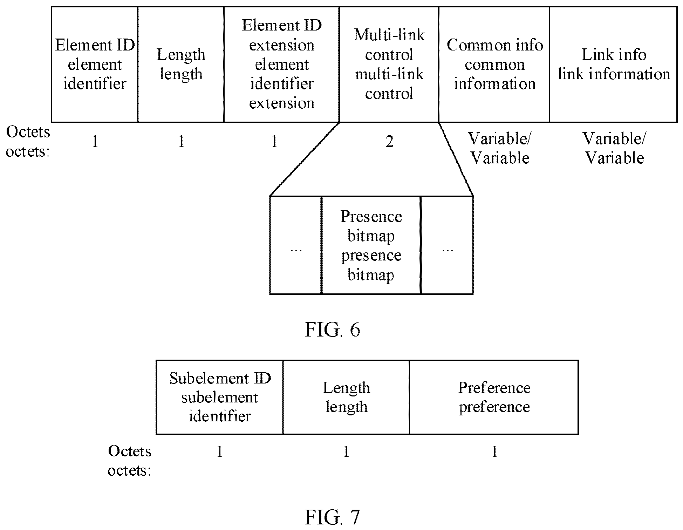

FIG. 5 is a diagram of a frame format of a neighbor report element according to an embodiment of this application. As shown in FIG. 5, the neighbor report element may include but is not limited to a basic service set identifier (BSS identifier, BSSID) field and an optional subelements (optional subelements) field. The BSSID field is a MAC address of any recommended AP in the candidate target AP MLD. The optional subelements field may be used to carry information about and a recommendation degree of the candidate target AP MLD. When the neighbor report element in the BSS transition candidate list entries field is used for recommendation, the optional subelements field may include the following content:
(1) Basic multi-link subelement (basic multi-link subelement) corresponding to the candidate target AP MLD FIG. 6 is a diagram of a frame format of a basic multi-link subelement according to an embodiment of this application. If a presence bitmap (presence bitmap) field of the basic multi-link subelement shown in FIG. 6 is all 0s, and there is no link information (link info) field, the neighbor report element indicates that "the candidate target AP MLD is recommended, but it is not specifically indicated that which APs are recommended". If the link info field of the basic multi-link subelement shown in FIG. 6 has one or more per-STA profile subelements (per-STA profile subelements), each per-STA profile subelement corresponds to one recommended affiliated AP in the candidate target AP MLD. In this case, the neighbor report element indicates that "an AP set in the candidate target AP MLD is recommended".
(2) BSS transition candidate preference subelement (BSS transition candidate preference subelement) corresponding to the candidate target AP MLD, indicating the recommendation degree of the candidate target AP MLD, where for details, refer to descriptions in the standard, and details are not described herein FIG. 7 is a diagram of a frame format of a BSS transition candidate preference subelement according to an embodiment of this application. As shown in FIG. 7, the BSS transition candidate preference subelement may include but is not limited to a preference (preference) field. A length of the preference field is 1 octet (equal to 8 bits). When a value of the preference field is 0, the preference field indicates that "the candidate target AP MLD is excluded", that is, the non-AP MLD is notified not to be associated with the mentioned candidate target AP MLD. When the value of the preference field ranges from 1 to 255, the preference field indicates the recommendation degree of the candidate target AP MLD. An ascending order of values indicates an ascending order of recommendation degrees. The value of 255 indicates "most recommended", and the value of 1 indicates "least recommended".

In short, the BSS transition candidate list entries field carries the one or more neighbor report elements. Each neighbor report element corresponds to a different candidate target AP MLD or a different AP set in the same candidate target AP MLD, and provides a recommended value/recommendation degree of the candidate target AP MLD. In addition, recommended values of different AP sets of the same candidate target AP MLD may be different. This is not discussed in this application.

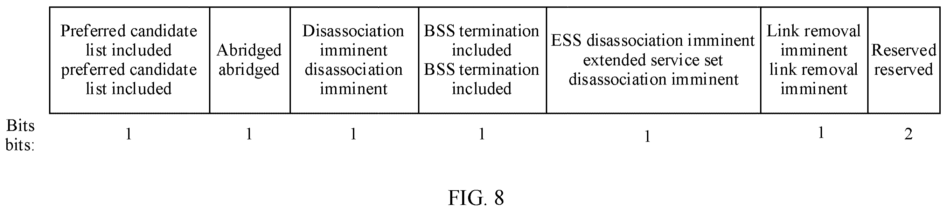

FIG. 8 is a diagram of a frame format of a request mode field according to an embodiment of this application. As shown in FIG. 8, the request mode (request mode) field includes but is not limited to an abridged field (abridged field). The abridged field may indicate, to a recipient of the BTM request frame, a predetermined treatment for a BSSID or an AP MLD not present in the BSS transition candidate list entries field (the Abridged (bit 1) field indicates to the recipient of the frame the intended treatment of all BSSIDs or AP MLDs not present in the BSS transition candidate list entries field). In the BSS transition candidate list entries field in this application, the BSSID may be used to identify a single-link station or a legacy station, for example, an AP.

For example, when a value of the abridged field is 1, the abridged field indicates "the BSSID or the AP MLD that is not present is excluded (for association)", that is, the non-AP MLD is notified not to be associated with the BSSID or the AP MLD not present in the BSS transition candidate list entries field. When the value of the abridged field is 0, the abridged field indicates that there is no recommendation for or against the association of the non-AP MLD with the BSSID or the AP MLD not present in the BSS transition candidate list entries field (the AP MLD sets the Abridged bit in the Request Mode field to 0 when the AP MLD has no recommendation for or against any BSSID or AP MLD not present in the BSS transition candidate list entries field).

In conclusion, the AP MLD currently associated with the non-AP MLD may notify, via the BSS transition candidate list entries field, the non-AP MLD of treatment (that is, whether to exclude or object to association) for the AP MLD around the non-AP MLD. The predetermined treatment for the BSSID or the AP MLD not present in the BSS transition candidate list entries field is indicated by the abridged field, and the recommendation degree of the candidate target AP MLD listed in the BSS transition candidate list entries field is indicated by the preference field. However, treatment for an AP that is in the candidate target AP MLD listed in the BSS transition candidate list entries field and that does not belong to a recommended AP set is not specified.

For example, it is assumed that an AP MLD includes four APs: an AP 1 to an AP 4. It is assumed that a BSSID field of a neighbor report element corresponding to the AP MLD is a MAC address of the AP 2 of the AP MLD, and a link info field has a per-STA profile subelement. The per-STA profile subelement corresponds to the AP 4 of the AP MLD. In this case, the neighbor report element indicates that "an AP set (that is, the AP 2 and the AP 4) of the AP MLD is recommended". In this case, treatment for the AP 1 and the AP 3 of the AP MLD is not clear.

In view of this, embodiments of this application provide an information indication method in BTM and an apparatus, to improve an information indication, and clarify a predetermined treatment for an AP that is not recommended in a candidate target AP MLD listed in a BSS transition candidate list entries field, so that a non-AP MLD is clearer about an attitude of a currently associated AP MLD and behavior of the non-AP MLD.

The following describes in detail the technical solutions provided in this application with reference to more accompanying drawings.

To clearly describe the technical solutions of this application, this application is described by using a plurality of embodiments. For details, refer to the following descriptions. In this application, unless otherwise specified, for same or similar parts of embodiments or implementations, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in different embodiments and the implementations/implementation methods in embodiments may be combined to form a new embodiment, implementation, or implementation method based on an internal logical relationship thereof. The following implementations of this application are not intended to limit the protection scope of this application. It may be understood that a sequence of the following embodiments does not represent a degree of importance.

### Embodiment 1

Embodiment 1 of this application mainly describes a method for improving an information indication by modifying a meaning of an abridged field of a request mode field.

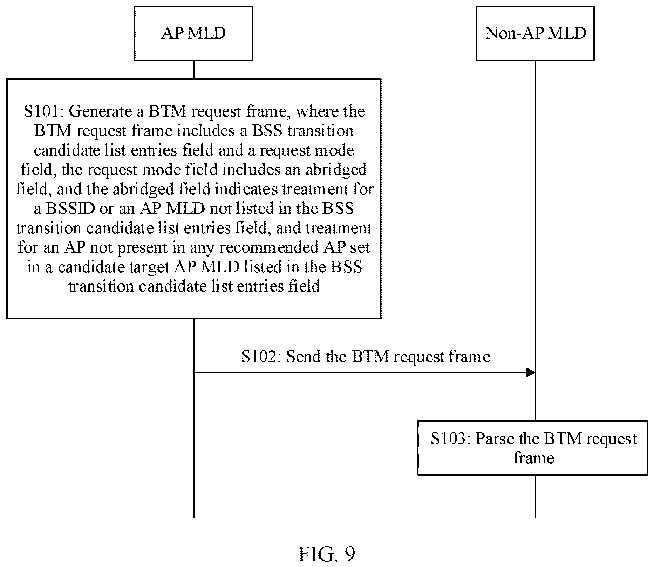

FIG. 9 is a first schematic flowchart of an information indication method in BTM according to an embodiment of this application. As shown in FIG. 9, the information indication method in the BTM includes but is not limited to the following steps.

S101: An AP MLD generates a BTM request frame, where the BTM request frame includes a BSS transition candidate list entries field and a request mode field, the request mode field includes an abridged field, and the abridged field indicates treatment for a BSSID or an AP MLD not present in the BSS transition candidate list entries field, and treatment for an AP not present in any recommended AP set in a candidate target AP MLD listed in the BSS transition candidate list entries field.

S102: The AP MLD sends the BTM request frame. Correspondingly, a non-AP MLD receives the BTM request frame.

S103: The non-AP MLD parses the BTM request frame. For example, the non-AP MLD may obtain, by parsing the abridged field of the BTM request frame, the treatment for the BSSID or the AP MLD not present in the BSS transition candidate list entries field, and the treatment for the AP not present in the any recommended AP set in the candidate target AP MLD listed in the BSS transition candidate list entries field.

In a possible implementation, a format (format) of an action field of the BTM request (BTM request) frame may be shown in FIG. 4. Details are not described herein again. The action field of the BTM request frame may include but is not limited to the BSS transition candidate list entries (BSS transition candidate list entries) field and the request mode (request mode) field. The BSS transition candidate list entries field includes one or more neighbor report elements, and the neighbor report element may be used to describe (or carry) a preference degree of a target BSS candidate or a preference degree of the candidate target AP MLD. Different neighbor report elements may correspond to different AP sets of a same candidate target AP MLD. Certainly, different neighbor report elements may alternatively correspond to different target BSS candidates or candidate target AP MLDs. A frame format of each neighbor report element may be shown in FIG. 5. Details are not described herein again.

A frame format of the request mode field may be shown in FIG. 8. Details are not described herein again. The request mode field includes the abridged field (abridged field). The abridged field may indicate treatment for (all) BSSIDs or (all) AP MLDs not present in the BSS transition candidate list entries field, and treatment for an AP not present in any recommended AP set in (all) candidate target AP MLDs listed in the BSS transition candidate list entries field. Alternatively, the abridged field may indicate treatment for (all) BSSIDs or (all) AP MLDs not present in the BSS transition candidate list entries field, and the treatment for the AP not present in the AP set in the candidate target AP MLD listed in the BSS transition candidate list entries field.

In this application, "(all) BSSIDs" may represent two meanings: the BSSID and all the BSSIDs. Similarly, "(all) AP MLDs" may represent the AP MLD and all the AP MLDs. A same expression in the following indicates a same meaning. Details are not described again.

In a possible implementation, a length of the abridged field is 1 bit. When the abridged field is of a first value, the abridged field indicates that a sender of the BTM request frame has no recommendation for or against association of a recipient of the BTM request frame with the BSSID or the AP MLD not present in the BSS transition candidate list entries field, and the AP not present in the any recommended AP set in the candidate target AP MLD present in the BSS transition candidate list entries field. When the abridged field is of a second value, the abridged field indicates that the sender of the BTM request frame objects to or excludes the association of the recipient of the BTM request frame with the BSSID or the AP MLD not present in the BSS transition candidate list entries field, and the AP not present in the any recommended AP set in the candidate target AP MLD present in the BSS transition candidate list entries field. The first value may be 0, and the second value may be 1. Certainly, the first value may alternatively be 1, and the second value may be 0. This is not limited in this embodiment of this application.

It may be understood that, if a presence bitmap (presence bitmap) field of a basic multi-link subelement of a neighbor report element is all 0s, and there is no link info field, it indicates that all affiliated (affiliated) APs of a candidate target AP MLD corresponding to the neighbor report element are recommended.

It may be further understood that "(all) AP MLDs not present in the BSS transition candidate list entries field" do not include the AP MLD that sends the BTM request frame. The application scenario shown in FIG. 3 is used as an example. It is assumed that a current non-AP MLD is associated with an AP MLD 1, and the AP MLD 1 finds that the non-AP MLD needs to perform BSS transition, or the non-AP MLD finds that the non-AP MLD needs to perform BSS transition. The AP MLD 1 sends, to the non-AP MLD, a BTM request frame that carries information about and recommendation degrees of an AP MLD 2, an AP MLD 3, and an AP MLD 4. Then, "(all) AP MLDs not present in the BSS transition candidate list entries field" refers to another AP MLD in a network other than the AP MLD 1, the AP MLD 2, the AP MLD 3, and the AP MLD 4. It is assumed that the AP MLD 2 has three APs: an AP 2-1, an AP 2-2, and an AP 2-3, the AP MLD 3 has two APs: an AP 3-1 and an AP 3-2, and the AP MLD 4 has two APs: an AP 4-1 and an AP 4-2. In addition, it is assumed that the BSS transition candidate list entries field includes four neighbor report elements in total. A neighbor report element 1 recommends a set of the AP 2-1 and the AP 2-2 of the AP MLD 2. A neighbor report element 2 recommends a set of the AP 2-2 and the AP 2-3 of the AP MLD 2. A neighbor report element 3 recommends the AP MLD 3 (that is, recommends all the affiliated APs of the AP MLD 3). A neighbor report element 4 recommends the AP 4-2 of the AP MLD 4 (where a BSSID field is a MAC address of the AP 4-2, a presence bitmap field is not all 0s, and there is no link info field). Then, "an AP not present in any recommended AP set in (all) candidate target AP MLDs listed in the BSS transition candidate list entries field" may include the AP 4-1. Optionally, for the recommended AP set {AP 2-1, AP 2-2}, treatment for the AP 2-3 may be by default, for example, objecting to association with the AP 2-3 by default. For the recommended AP set {AP 2-2, AP 2-3}, treatment for the AP 2-1 may be by default, for example, objecting to association with the AP 2-1 by default. In other words, for each recommended AP set, treatment for an AP that is not present in the recommended AP set but is present in another AP set in a same AP MLD may be a default rule.

In another possible implementation, when the abridged field is of a first value, the abridged field indicates that a sender of the BTM request frame has no recommendation for or against association of a recipient of the BTM request frame with the BSSID or the AP MLD not present in the BSS transition candidate list entries field, and the AP not present in the AP set in the candidate target AP MLD present in the BSS transition candidate list entries field. When the abridged field is of a second value, the abridged field indicates that the sender of the BTM request frame objects to or excludes the association of the recipient of the BTM request frame with the BSSID or the AP MLD not present in the BSS transition candidate list entries field, and the AP not present in the AP set in the candidate target AP MLD present in the BSS transition candidate list entries field. The first value may be 0, and the second value may be 1. Certainly, the first value may alternatively be 1, and the second value may be 0. This is not limited in this embodiment of this application.

The application scenario shown in FIG. 3 is used as an example. It is assumed that a current non-AP MLD is associated with an AP MLD 1, and the AP MLD 1 finds that the non-AP MLD needs to perform BSS transition, or the non-AP MLD finds that the non-AP MLD needs to perform BSS transition. The AP MLD 1 sends, to the non-AP MLD, a BTM request frame that carries information about and a recommendation degree of an AP MLD 2. It is assumed that the AP MLD 2 has three APs: an AP 2-1, an AP 2-2, and an AP 2-3. In addition, it is assumed that the BSS transition candidate list entries field includes two neighbor report elements. A neighbor report element 1 recommends a set of the AP 2-1 and the AP 2-2 of the AP MLD 2. A neighbor report element 2 recommends a set of the AP 2-2 and the AP 2-3 of the AP MLD 2. For the recommended AP set {AP 2-1, AP 2-2}, the AP 2-3 is not in this set. Then, when a value of the abridged field is 1, the abridged field indicates to: exclude the association with the BSSID or the AP MLD not present in the BSS transition candidate list entries field, and if the non-AP MLD selects the AP set {AP 2-1, AP 2-2}, exclude association with the AP 2-3. When the value of the abridged field is 0, the abridged field indicates to: have no recommendation for or against the association with the BSSID or the AP MLD not present in the BSS transition candidate list entries field, and if the non-AP MLD selects the AP set {AP 2-1, AP 2-2}, have no recommendation for or against the association with the AP 2-3. For the recommended AP set {AP 2-2, AP 2-3}, the AP 2-1 is not in this set. Then, when a value of the abridged field is 1, the abridged field indicates to: exclude the association with the BSSID or the AP MLD not present in the BSS transition candidate list entries field, and if the non-AP MLD selects the AP set {AP 2-2, AP 2-3}, exclude association with the AP 2-1. When the value of the abridged field is 0, the abridged field indicates to: have no recommendation for or against the association with the BSSID or the AP MLD not present in the BSS transition candidate list entries field, and if the non-AP MLD selects the AP set {AP 2-2, AP 2-3}, have no recommendation for or against the association with the AP 2-1.

In a possible implementation, a BSS transition candidate preference subelement of the BSS transition candidate list entries field includes a preference field. For example, an existing meaning may continue to be used as a meaning of the preference field, or a meaning of the preference field may change with evolution of a standard. This is not limited in embodiments of this application. Alternatively, the preference field may indicate a recommendation degree of an AP set. The AP set may be an AP set recommended by a neighbor report element to which the preference field belongs. In other words, the AP set is a recommended AP set in a candidate target AP MLD listed in the BSS transition candidate list entries field.

In this embodiment of this application, a meaning of the abridged field is extended to indicate both the treatment for the BSSID or the AP MLD not present in the BSS transition candidate list entries field, and the treatment for the AP not present in the candidate target AP MLD listed in the BSS transition candidate list entries field. This improves the information indication, and clarifies the treatment for the AP in the MLD, so that the non-AP MLD is clearer about an attitude of a currently associated AP MLD and behavior of the non-AP MLD. In addition, a meaning of this embodiment of this application is clear, no overheads are increased, and compatibility is good.

Further, in this embodiment of this application, the meaning of the preference field may be further changed, so that the neighbor report element can indicate a recommendation degree of an AP set in the AP MLD when recommending the set.

### Embodiment 2

Embodiment 2 of this application mainly describes a method for improving an information indication by using a reserved bit in a request mode field.

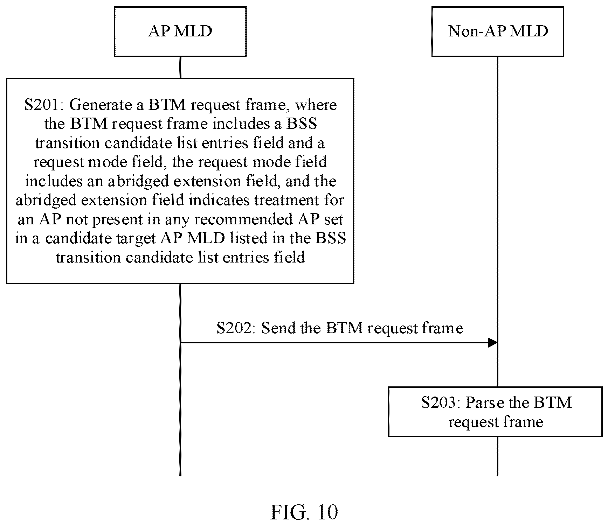

FIG. 10 is a second schematic flowchart of an information indication method in BTM according to an embodiment of this application. As shown in FIG. 10, the information indication method in the BTM includes but is not limited to the following steps.

S201: An AP MLD generates a BTM request frame, where the BTM request frame includes a BSS transition candidate list entries field and the request mode field, the request mode field includes an abridged extension field, and the abridged extension field indicates treatment for an AP not present in any recommended AP set in a candidate target AP MLD listed in the BSS transition candidate list entries field.

S202: The AP MLD sends the BTM request frame. Correspondingly, a non-AP MLD receives the BTM request frame.

S203: The non-AP MLD parses the BTM request frame. For example, the non-AP MLD may obtain, by parsing the abridged extension field of the BTM request frame, the treatment for the AP not present in the any recommended AP set in the candidate target AP MLD listed in the BSS transition candidate list entries field. In addition, the non-AP MLD may obtain, by parsing an abridged extension field of the BTM request frame, a predetermined treatment for a BSSID or an AP MLD not present in the BSS transition candidate list entries field.

In a possible implementation, a format (format) of an action field of the BTM request (BTM request) frame may be shown in FIG. 4. Details are not described herein again. The action field of the BTM request frame may include but is not limited to the BSS transition candidate list entries (BSS transition candidate list entries) field and the request mode (request mode) field. The BSS transition candidate list entries field includes one or more neighbor report elements, and the neighbor report element may be used to describe (or carry) a preference degree of a target BSS candidate or a preference degree of the candidate target AP MLD. Different neighbor report elements may correspond to different AP sets of a same candidate target AP MLD. Certainly, different neighbor report elements may alternatively correspond to different target BSS candidates or candidate target AP MLDs. A frame format of each neighbor report element may be shown in FIG. 5. Details are not described herein again.

The request mode field may include the abridged field (abridged field) and the abridged extension field (abridged extension field). The abridged field may indicate, to a recipient of the BTM request frame, predetermined treatment for all BSSIDs or AP MLDs not present in the BSS transition candidate list entries field (the Abridged (bit 1) field indicates to the recipient of the frame the intended treatment of all BSSIDs or AP MLDs not present in the BSS transition candidate list entries field). The abridged extension field may indicate, to the recipient of the BTM request frame, treatment for an AP not present in any recommended AP set in (all) candidate target AP MLDs listed in the BSS transition candidate list entries field. Alternatively, the abridged extension field may indicate, to the recipient of the BTM request frame, the treatment for the AP not present in the AP set in the candidate target AP MLD listed in the BSS transition candidate list entries field.

For specific meanings of "(all) AP MLDs not present in the BSS transition candidate list entries field", "an AP not present in any recommended AP set in (all) candidate target AP MLDs listed in the BSS transition candidate list entries field", and "the treatment for the AP not present in the AP set in the candidate target AP MLD listed in the BSS transition candidate list entries field", refer to the descriptions in the foregoing Embodiment 1. Details are not described herein again.

It may be understood that the "abridged extension field (abridged extension field)" in embodiments of this application may alternatively have another name, for example, an "extension abridged field (extension abridged field)" or a first field. This is not limited in this embodiment of this application.

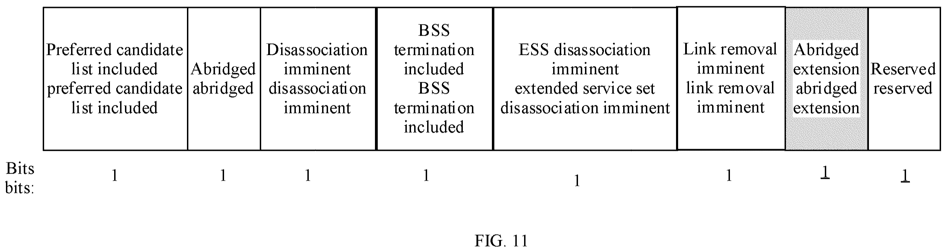

For example, FIG. 11 is a diagram of another frame format of a request mode field according to an embodiment of this application. As shown in FIG. 11, 1 reserved bit in the request mode field may be used as the abridged extension field. When the abridged extension field is of a third value, the abridged extension field indicates that a sender of the BTM request frame has no recommendation for or against association of the recipient of the BTM request frame with the AP not present in the any recommended AP set in the candidate target AP MLD present in the BSS transition candidate list entries field. When the abridged extension field is of a fourth value, the abridged extension field indicates that the sender of the BTM request frame objects to or excludes the association of the recipient of the BTM request frame with the AP not present in the any recommended AP set in the candidate target AP MLD present in the BSS transition candidate list entries field. Alternatively, when the abridged extension field is of a third value, the abridged extension field indicates that a sender of the BTM request frame has no recommendation for or against association of the recipient of the BTM request frame with an AP not present in an AP set when the recipient selects the AP set in a candidate target AP MLD present in the BSS transition candidate list entries field. When the abridged extension field is of a fourth value, the abridged extension field indicates that the sender of the BTM request frame objects to or excludes the association of the recipient of the BTM request frame with the AP not present in the AP set when the recipient selects the AP set in the candidate target AP MLD present in the BSS transition candidate list entries field.

The third value may be 0 or 1. Correspondingly, the fourth value may be 1 or 0. This is not limited in this embodiment of this application.

It may be understood that a value and a meaning of the abridged field of the request mode field shown in FIG. 11 may remain unchanged. When the abridged field is of a first value (for example, 0), the abridged field indicates that the sender of the BTM request frame has no recommendation for or against association of the recipient of the BTM request frame with the BSSID or the AP MLD not present in the BSS transition candidate list entries field. When the abridged field is of a second value (for example, 1), the abridged field indicates that the sender of the BTM request frame objects to or excludes the association of the recipient of the BTM request frame with the BSSID or the AP MLD not present in the BSS transition candidate list entries field.

It may be further understood that a length of the abridged extension field in FIG. 11 may be 1 bit or more bits. This is not limited in embodiments of this application.

In this embodiment of this application, the reserved bit in the request mode field indicates the treatment for the AP not present in the candidate target AP MLD listed in the BSS transition candidate list entries field. This improves an information indication, so that the non-AP MLD is clearer about an attitude of a currently associated AP MLD and behavior of the non-AP MLD. In addition, in this embodiment of this application, the meaning of the abridged field is not changed, but an additional bit is used for supplementary descriptions. Logic is clear, and this facilitates understanding of the non-AP MLD. In addition, the added bit and the existing abridged field are present at the same time, and the logic is clean.

### Embodiment 3

Embodiment 3 of this application mainly describes how to modify a meaning of an abridged field, so that the abridged field can indicate treatment for an AP set that is not recommended in an AP MLD present in a BSS transition candidate list entries field.

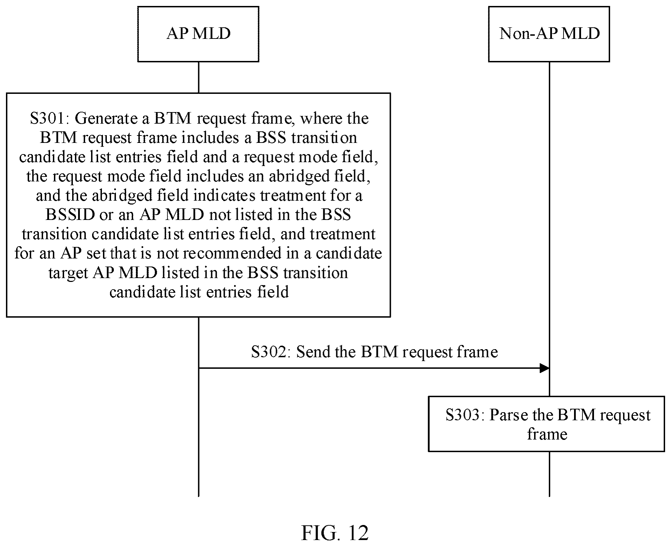

FIG. 12 is a third schematic flowchart of an information indication method in BTM according to an embodiment of this application. As shown in FIG. 12, the information indication method in the BTM includes but is not limited to the following steps.

S301: The AP MLD generates a BTM request frame, where the BTM request frame includes the BSS transition candidate list entries field and a request mode field, the request mode field includes the abridged field, and the abridged field indicates treatment for a BSSID or an AP MLD not present in the BSS transition candidate list entries field, and the treatment for the AP set that is not recommended in the candidate target AP MLD listed in the BSS transition candidate list entries field.

S302: The AP MLD sends the BTM request frame. Correspondingly, a non-AP MLD receives the BTM request frame.

S303: The non-AP MLD parses the BTM request frame. For example, the non-AP MLD may obtain, by parsing the abridged field of the BTM request frame, the treatment for the BSSID or the AP MLD not present in the BSS transition candidate list entries field, and the treatment for the AP set that is not recommended in the candidate target AP MLD listed in the BSS transition candidate list entries field.

In a possible implementation, a format (format) of an action field of the BTM request (BTM request) frame may be shown in FIG. 4. Details are not described herein again. The action field of the BTM request frame may include but is not limited to the BSS transition candidate list entries (BSS transition candidate list entries) field and the request mode (request mode) field. The BSS transition candidate list entries field includes one or more neighbor report elements, and the neighbor report element may be used to describe (or carry) a preference degree of a target BSS candidate or a preference degree of the candidate target AP MLD. Different neighbor report elements may correspond to different AP sets of a same candidate target AP MLD. Certainly, different neighbor report elements may alternatively correspond to different target BSS candidates or candidate target AP MLDs. A frame format of each neighbor report element may be shown in FIG. 5. Details are not described herein again.

A frame format of the request mode field may be shown in FIG. 8. Details are not described herein again. The request mode field includes the abridged field (abridged field). The abridged field may indicate treatment for (all) BSSIDs or (all) AP MLDs not present in the BSS transition candidate list entries field, and treatment for an AP set that is not recommended in (all) candidate target AP MLDs listed in the BSS transition candidate list entries field.

It may be understood that, for a specific meaning of "(all) AP MLDs not present in the BSS transition candidate list entries field", refer to the descriptions in the foregoing Embodiment 1. Details are not described herein again.

However, a meaning of "an AP set that is not recommended in (all) candidate target AP MLDs listed in the BSS transition candidate list entries field" may be illustrated by using an example. The "AP set" may include one or more APs. In other words, a single AP may also be used as one AP set, and all APs affiliated with one AP MLD may also be used as one AP set. The application scenario shown in FIG. 3 is used as an example. It is assumed that a current non-AP MLD is associated with an AP MLD 1, and the AP MLD 1 finds that the non-AP MLD needs to perform BSS transition, or the non-AP MLD finds that the non-AP MLD needs to perform BSS transition. The AP MLD 1 sends, to the non-AP MLD, a BTM request frame that carries information about and recommendation degrees of an AP MLD 2, an AP MLD 3, and an AP MLD 4. It is assumed that the AP MLD 2 has three APs: an AP 2-1, an AP 2-2, and an AP 2-3, the AP MLD 3 has two APs: an AP 3-1 and an AP 3-2, and the AP MLD 4 has two APs: an AP 4-1 and an AP 4-2. In addition, it is assumed that the BSS transition candidate list entries field includes three neighbor report elements in total. A neighbor report element 1 recommends a set of the AP 2-1 and the AP 2-2 of the AP MLD 2. A neighbor report element 2 recommends the AP MLD 3 (that is, recommends all the affiliated APs of the AP MLD 3). A neighbor report element 3 recommends the AP 4-2 of the AP MLD 4. Then, "AP sets that are not recommended in (all) candidate target AP MLDs listed in the BSS transition candidate list entries field" include: {AP 2-1, AP 2-3}, {AP 2-2, AP 2-3}, {AP 2-1, AP 2-2, AP 2-3}, {AP 2-1}, {AP 2-2}, {AP 2-3}, {AP 3-1}, {AP 3-2}, {AP 4-1}, and {AP 4-1, AP 4-2}. Certainly, the "AP set" may alternatively include two or more APs. This is not limited in embodiments of this application.

In a possible implementation, a length of the abridged field is 1 bit. When the abridged field is of a first value, the abridged field indicates that a sender of the BTM request frame has no recommendation for or against association of a recipient of the BTM request frame with the BSSID or the AP MLD not present in the BSS transition candidate list entries field, and the AP set that is not recommended in the candidate target AP MLD present in the BSS transition candidate list entries field. When the abridged field is of a second value, the abridged field indicates that the sender of the BTM request frame objects to or excludes the association of the recipient of the BTM request frame with the BSSID or the AP MLD not present in the BSS transition candidate list entries field, and the AP set that is not recommended in the candidate target AP MLD present in the BSS transition candidate list entries field.

The first value may be 0, and the second value may be 1. Certainly, the first value may alternatively be 1, and the second value may be 0. This is not limited in this embodiment of this application.

In a possible implementation, a BSS transition candidate preference subelement of the BSS transition candidate list entries field includes a preference field. For example, an existing meaning may continue to be used as a meaning of the preference field, or a meaning of the preference field may change with evolution of a standard. This is not limited in embodiments of this application. Alternatively, the preference field may indicate a recommendation degree of an AP set. The AP set may be an AP set recommended by a neighbor report element to which the preference field belongs. In other words, the AP set is a recommended AP set in a target AP MLD listed in the BSS transition candidate list entries field.

In this embodiment of this application, a meaning of the abridged field is extended to indicate both the treatment for the BSSID or the AP MLD not present in the BSS transition candidate list entries field, and the treatment for the AP set that is not recommended in the candidate target AP MLD listed in the BSS transition candidate list entries field. This improves an information indication, so that the non-AP MLD is clearer about an attitude of a currently associated AP MLD and behavior of the non-AP MLD. In addition, a meaning of this embodiment of this application is clear, no overheads are increased, and compatibility is good.

Further, in this embodiment of this application, the meaning of the preference field may be further changed, so that the neighbor report element can indicate a recommendation degree of an AP set in the AP MLD when recommending the set.

### Embodiment 4

Embodiment 4 of this application mainly describes a method for improving an information indication by using a bit in a neighbor report element.

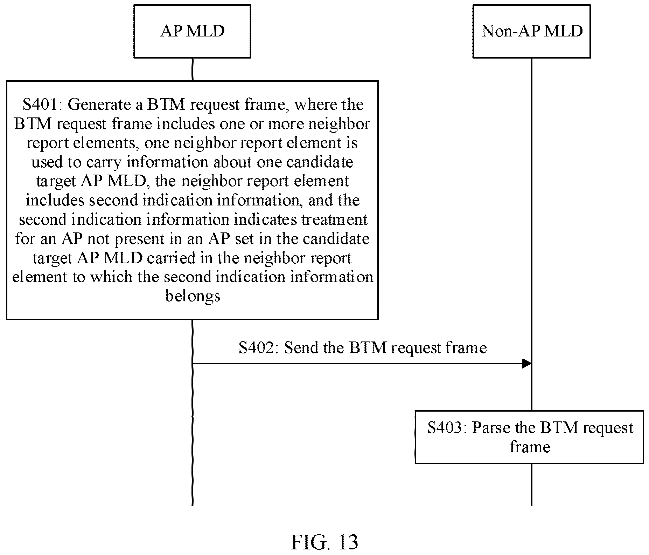

FIG. 13 is a fourth schematic flowchart of an information indication method in BTM according to an embodiment of this application. As shown in FIG. 13, the information indication method in the BTM includes but is not limited to the following steps.

S401: An AP MLD generates a BTM request frame, where the BTM request frame includes one or more neighbor report elements, one neighbor report element is used to carry information about one candidate target AP MLD, the neighbor report element includes second indication information, and the second indication information indicates treatment for an AP not present in an AP set in the candidate target AP MLD carried in the neighbor report element to which the second indication information belongs.

S402: The AP MLD sends the BTM request frame. Correspondingly, a non-AP MLD receives the BTM request frame.

S403: The non-AP MLD parses the BTM request frame. For example, the non-AP MLD may obtain, by parsing the second indication information in the BTM request frame, the treatment for the AP not present in the AP set in the candidate target AP MLD carried in the neighbor report element to which the second indication information belongs.

In a possible implementation, a format (format) of an action field of the BTM request (BTM request) frame may be shown in FIG. 4. Details are not described herein again. The action field of the BTM request frame may include but is not limited to the BSS transition candidate list entries (BSS transition candidate list entries) field. The BSS transition candidate list entries field includes one or more neighbor report elements, and one neighbor report element may be used to describe (or carry) a preference degree of one target BSS candidate or a preference degree of one candidate target AP MLD. Different neighbor report elements may be used to describe (or carry) a preference degree of a same candidate target AP MLD. Certainly, different neighbor report elements may alternatively be used to describe (or carry) preference degrees of different target BSS candidates or preference degrees of different candidate target AP MLDs. A frame format of each neighbor report element may be shown in FIG. 5. Details are not described herein again.

In a possible implementation, each neighbor report element includes one piece of second indication information, and the second indication information may indicate treatment for an AP not present in an AP set in the candidate target AP MLD carried in the neighbor report element to which the second indication information belongs. Because one neighbor report element corresponds to one candidate target AP MLD, the second indication information may be briefly described as: indicating treatment for an AP not present in an AP set in a candidate target AP MLD. It may be understood that the "AP set" may include one or more APs. In other words, a single AP may also be used as one AP set, and all APs affiliated with one AP MLD may also be used as one AP set.

The application scenario shown in FIG. 3 is used as an example. It is assumed that a current non-AP MLD is associated with an AP MLD 1, and the AP MLD 1 finds that the non-AP MLD needs to perform BSS transition, or the non-AP MLD finds that the non-AP MLD needs to perform BSS transition. The AP MLD 1 sends, to the non-AP MLD, a BTM request frame that carries information about and a recommendation degree of an AP MLD 2. It is assumed that the AP MLD 2 has three APs: an AP 2-1, an AP 2-2, and an AP 2-3, the BSS transition candidate list entries field includes one neighbor report element, and a BSSID field of the neighbor report element is a MAC address of the AP 2-1 of the AP MLD 2. A link info field has one per-STA profile subelement, and the per-STA profile subelement corresponds to the AP 2-2 of the AP MLD 2. In this case, the neighbor report element indicates that a set of the AP 2-1 and the AP 2-2 of the AP MLD 2 is recommended. In this case, the second indication information in the neighbor report element indicates treatment for the AP 2-3 not present in the set of the AP 2-1 and the AP 2-2 of the AP MLD 2 carried in the neighbor report element.

In a possible implementation, when the second indication information is of a first value, the second indication information indicates that a sender of the BTM request frame has no recommendation for or against association of a recipient of the BTM request frame with the AP not present in the AP set in the candidate target AP MLD carried in the neighbor report element to which the second indication information belongs. When the second indication information is of a second value, the second indication information indicates that the sender of the BTM request frame objects to or excludes the association of the recipient of the BTM request frame with the AP not present in the AP set in the candidate target AP MLD carried in the neighbor report element to which the second indication information belongs. The first value may be 1 or 0. Correspondingly, the second value may be 0 or 1. This is not limited in this embodiment of this application.

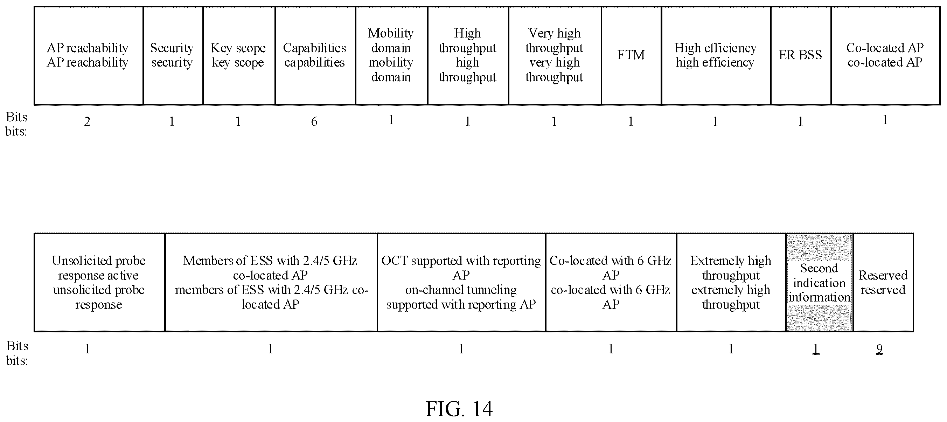

In a possible implementation, the second indication information may be carried in a BSSID information field of the neighbor report element. For example, the second indication information may be represented by using a reserved bit in the BSSID information field. Alternatively, an extremely high throughput (extremely high throughput) bit in the BSSID information field may be reused to indicate the treatment for the AP not present in the AP set in the candidate target AP MLD carried in the neighbor report element. FIG. 14 is a diagram of a frame format of a BSSID information field according to an embodiment of this application. As shown in FIG. 14, 1 reserved bit in the BSSID information field may be used as the second indication information. When a value of the second indication information is 1, the second indication information indicates that the sender of the BTM request frame objects to or excludes the association of the recipient of the BTM request frame with the AP not present in the AP set in the candidate target AP MLD carried in the neighbor report element to which the second indication information belongs. When the value of the second indication information is 0, the second indication information indicates that the sender of the BTM request frame has no recommendation for or against the association of the recipient of the BTM request frame with the AP not present in the AP set in the candidate target AP MLD carried in the neighbor report element to which the second indication information belongs.

It may be understood that FIG. 14 is merely an example. In embodiments of this application, a bit length of the second indication information is not limited, and a correspondence between the value and a meaning of the second indication information is not limited either.

In this embodiment of this application, the 1 reserved bit is used in the BSSID information field of the neighbor report element, to indicate the treatment for the AP not present in the AP set in the candidate target AP MLD carried in the neighbor report element. There can be treatment for each recommended AP set in the candidate target AP MLD, and this is flexible for use.

In another possible implementation, the second indication information may be carried in a BSS transition candidate preference subelement of the neighbor report element. For example, because the existing BSS transition candidate preference subelement is not extensible, a length of a preference field may be shortened, so that the length of the preference field is less than or equal to 7 bits, but a meaning of the preference field is not changed. 1 bit or more bits saved by shortening the preference field represent the second indication information. In other words, the preference field of the BSS transition candidate preference subelement is less than or equal to 7 bits, the bit length of the second indication information is greater than or equal to 1 bit, and a sum of the length of the preference field and the bit length of the second indication information is less than or equal to 1 octet (8 bits). It may be understood that the meaning of the preference field is not limited in embodiments of this application, and only the length of the preference field is changed. The meaning of the preference field may change with evolution of a standard.

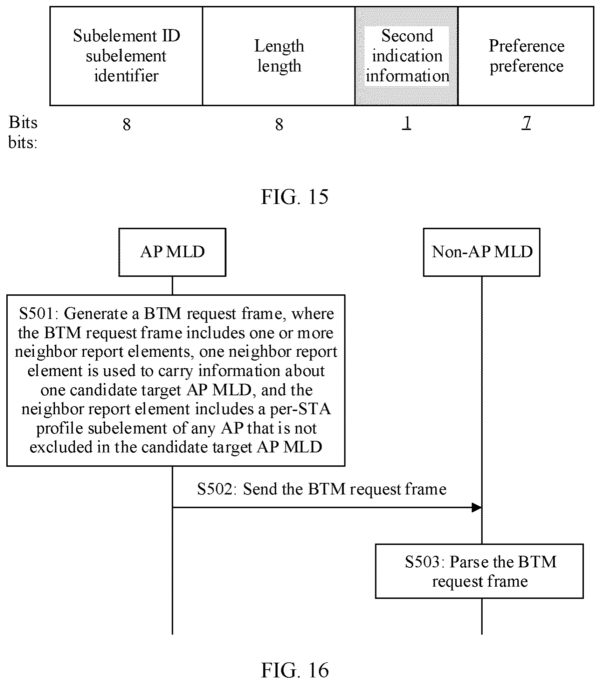

FIG. 15 is a diagram of another frame format of a BSS transition candidate preference subelement according to an embodiment of this application. As shown in FIG. 15, the length of the preference field may be shortened from 1 octet (8 bits in total) to 7 bits, and 1 saved bit is used as the second indication information. For example, a least significant bit (least significant bit, LSB), namely, B0, in the octet (B0 to B7) may be used as the second indication information. When the value of the second indication information (for example, B0) is 0, the second indication information indicates that the sender of the BTM request frame objects to or excludes the association of the recipient of the BTM request frame with the AP not present in the AP set in the candidate target AP MLD carried in the neighbor report element to which the second indication information belongs. When the value of the second indication information (for example, B0) is 1, the second indication information indicates that the sender of the BTM request frame has no recommendation for or against the association of the recipient of the BTM request frame with the AP not present in the AP set in the candidate target AP MLD carried in the neighbor report element to which the second indication information belongs. In this way, this can be better compatible with a conventional station (that is, a single-link station).

It may be understood that FIG. 15 is merely an example. In embodiments of this application, the bit length of the second indication information is not limited, and the correspondence between the value and the meaning of the second indication information is not limited either.

In this embodiment of this application, the second indication information is carried in the BSS transition candidate preference subelement of the neighbor report element, to indicate the treatment for the AP not present in the AP set in the candidate target AP MLD carried in the neighbor report element. There can be treatment for each recommended AP set in the candidate target AP MLD, and this is flexible for use. In addition, the second indication information and a preference value are used at the same time, that is, the second indication information is not present when the neighbor report element is not used for recommendation.

In a possible implementation, the BSS transition candidate preference subelement of the neighbor report element includes the preference field. For the meaning of the preference field, refer to related descriptions in the foregoing Embodiment 1. Details are not described herein again.

In this embodiment of this application, the second indication information is carried in the neighbor report element, to indicate treatment for an AP not present in an AP set in a single candidate target AP MLD, so that there can be the treatment for each recommended AP set, and this is flexible for use.

### Embodiment 5

Embodiment 5 of this application mainly describes a method for improving an information indication by redefining a recommended AP set in a link info field.

FIG. 16 is a fifth schematic flowchart of an information indication method in BTM according to an embodiment of this application. As shown in FIG. 16, the information indication method in the BTM includes but is not limited to the following steps.

S501: An AP MLD generates a BTM request frame, where the BTM request frame includes one or more neighbor report elements, one neighbor report element is used to carry information about one candidate target AP MLD, and the neighbor report element includes a per-STA profile subelement of any AP that is not excluded in the candidate target AP MLD. Optionally, the per-STA profile subelement further includes third indication information, and the third indication information may indicate treatment for an AP corresponding to the per-STA profile subelement.

S502: The AP MLD sends the BTM request frame. Correspondingly, a non-AP MLD receives the BTM request frame.

S503: The non-AP MLD parses the BTM request frame. For example, the non-AP MLD may obtain, by parsing the neighbor report element of the BTM request frame, the information about the AP that is not excluded in the candidate target AP MLD. Further, the non-AP MLD may obtain, by parsing the per-STA profile subelement of the neighbor report element, the treatment for the AP corresponding to the per-STA profile subelement.

In a possible implementation, a format (format) of an action field of the BTM request (BTM request) frame may be shown in FIG. 4. Details are not described herein again. The action field of the BTM request frame may include but is not limited to the BSS transition candidate list entries (BSS transition candidate list entries) field. The BSS transition candidate list entries field includes one or more neighbor report elements, and one neighbor report element may be used to describe (or carry) a preference degree of one target BSS candidate or a preference degree of one candidate target AP MLD. Different neighbor report elements may be used to describe (or carry) a preference degree of a same candidate target AP MLD. Certainly, different neighbor report elements may alternatively be used to describe (or carry) preference degrees of different target BSS candidates or preference degrees of different candidate target AP MLDs. A frame format of each neighbor report element may be shown in FIG. 5. Details are not described herein again.

One neighbor report element may include a basic multi-link subelement (basic multi-link subelement) corresponding to one candidate target AP MLD. A frame format of the basic multi-link subelement may be shown in FIG. 6. Details are not described herein again. It may be understood that, if the AP MLD needs to recommend an AP set of a candidate target AP MLD to the non-AP MLD, a neighbor report element of any AP in the AP set needs to be added to the BSS transition candidate list entries field (that is, a BSSID field of the neighbor report element is a MAC address of the any AP in the AP set). In addition, a basic multi-link subelement is added to the neighbor report element, and a per-STA profile subelement of another AP in the AP set is to be added to a link info field of the basic multi-link subelement. In short, the link info field carries a per-STA profile subelement of an AP other than the AP that is in the recommended AP set and that is indicated by the BSSID field.

In this embodiment of this application, if the AP MLD needs to recommend an AP set of a candidate target AP MLD to the non-AP MLD, a BSSID field of a neighbor report element is still a MAC address of any AP in the AP set. However, a link info field of a basic multi-link subelement includes a per-STA profile subelement of any AP that is in the candidate target AP MLD and that is not excluded (from association). Optionally, each per-STA profile subelement further includes third indication information. The third indication information may indicate treatment for an AP corresponding to the per-STA profile subelement. One per-STA profile subelement corresponds to one AP that is not excluded in the candidate target AP MLD. Herein, "not excluded" may include at least two meanings: "recommended" and "no recommendation for or against". In this embodiment of this application, it is further considered by default that an AP not present in the neighbor report element is excluded from association. Herein, "an AP not present in the neighbor report element" may refer to an AP that is in the candidate target AP MLD carried in the neighbor report element and that is other than the AP indicated by the BSSID field and the AP corresponding to the per-STA profile subelement.

In a possible implementation, when the third indication information in a per-STA profile subelement is of a first value, the third indication information indicates that a sender of the BTM request frame has no recommendation for or against association of a recipient of the BTM request frame with an AP that corresponds to the per-STA profile subelement. When the third indication information in the per-STA profile subelement is of a second value, the third indication information indicates that the sender of the BTM request frame has recommendation for the association of the recipient of the BTM request frame with the AP that corresponds to the per-STA profile subelement. The first value may be 0 or 1. Correspondingly, the second value may be 1 or 0. This is not limited in this embodiment of this application.

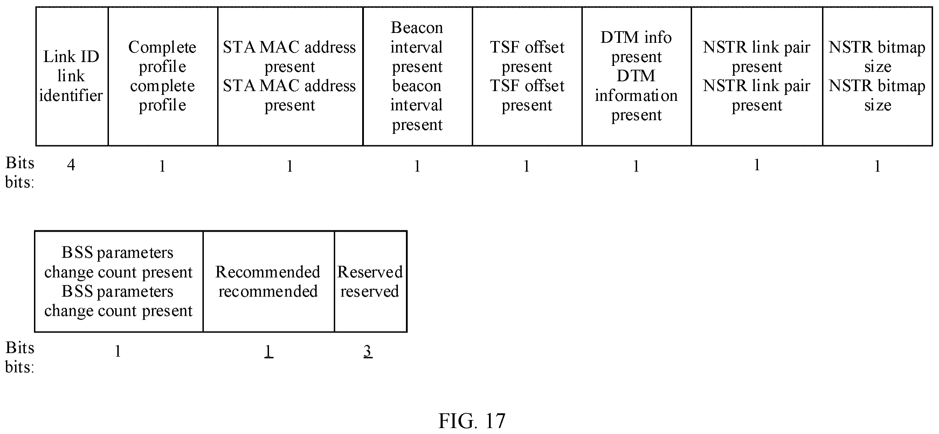

In a possible implementation, the third indication information may be carried in a station control (STA control) field of the per-STA profile subelement. For example, 1 reserved bit in the STA control field of the per-STA profile subelement may represent the third indication information. FIG. 17 is a diagram of a frame format of a STA control field according to an embodiment of this application. For ease of description in FIG. 17, the third indication information is referred to as a recommended field (recommended field). It may be understood that, in actual application, the third indication information may have another field name. This is not limited in embodiments of this application. As shown in FIG. 17, the STA control field includes but is not limited to the recommended field (recommended field). For example, a length of the recommended field is 1 bit. When a value of the recommended field is 1, the recommended field indicates that the AP MLD has recommendation for association of the non-AP MLD with an AP that corresponds to a per-STA profile subelement to which the recommended field belongs. When the value of the recommended field is 0, the recommended field indicates that the AP MLD has no recommendation for or against the association of the non-AP MLD with the AP that corresponds to the per-STA profile subelement to which the recommended field belongs. It may be understood that whether the value of the recommended field being 1 or 0 indicates the recommendation is not limited in this embodiment of this application. FIG. 17 is merely an example, and the length of the recommended field is not limited in this embodiment of this application.

In this embodiment of this application, the AP not present in the neighbor report element is excluded from association by default, and the third indication information specifies whether the AP that is present and that corresponds to the per-STA profile subelement is recommended for association. Because association preference information is present in a per-STA profile subelement corresponding to each AP, there can be treatment for each AP in each AP set provided by the AP MLD, and this is very flexible for use.

### Embodiment 6

Embodiment 6 of this application mainly describes a default treatment for an AP not present in a candidate target AP MLD listed in a BSS transition candidate list entries field.

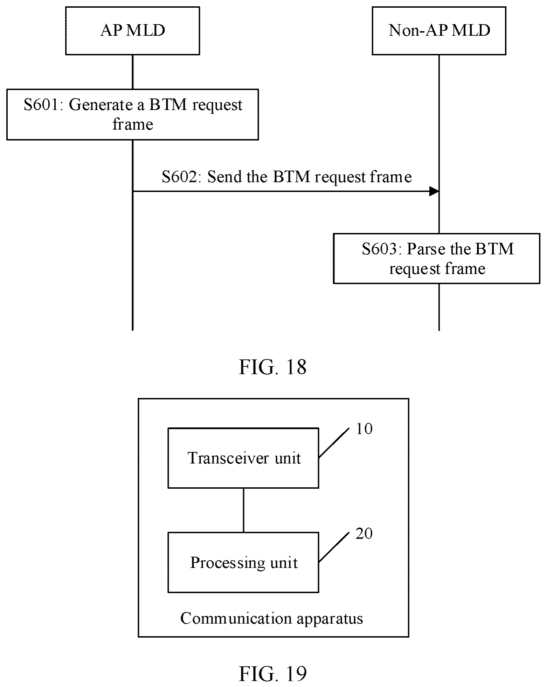

FIG. 18 is a sixth schematic flowchart of an information indication method in BTM according to an embodiment of this application. As shown in FIG. 18, the information indication method in the BTM includes but is not limited to the following steps.

S601: An AP MLD generates a BTM request frame.

S602: The AP MLD sends the BTM request frame. Correspondingly, a non-AP MLD receives the BTM request frame.

S603: The non-AP MLD parses the BTM request frame.

In a possible implementation, a format (format) of an action field of the BTM request (BTM request) frame may be shown in FIG. 4. Details are not described herein again. The action field of the BTM request frame may include but is not limited to the BSS transition candidate list entries (BSS transition candidate list entries) field and a request mode (request mode) field. A frame format of the request mode field may be shown in FIG. 8. Details are not described herein again. The request mode field includes an abridged field (abridged field). The abridged field may indicate treatment for (all) BSSIDs or (all) AP MLDs not present in the BSS transition candidate list entries field. However, treatment for an AP not present in any recommended AP set in (all) candidate target AP MLDs listed in the BSS transition candidate list entries field may be a default rule.

In a possible implementation, the default rule may include any one of the following: excluding/objecting to association with an AP that is not recommended in the candidate target AP MLD present in the BSS transition candidate list entries field, and having no recommendation for or against the association with the AP that is not recommended in the candidate target AP MLD present in the BSS transition candidate list entries field. The non-AP MLD needs to treat, as an AP having a specific preference value like a value 1, the AP that is not recommended in the AP MLD present in the BSS transition candidate list entries field. Herein, the "not recommended AP" may refer to "an AP not present in any recommended AP set" or "an AP not present in a recommended AP set".

In this embodiment of this application, the default treatment for the AP not present in the candidate target AP MLD listed in the BSS transition candidate list entries field is designed. This can improve an information indication, so that the non-AP MLD is clearer about an attitude of a currently associated AP MLD and behavior of the non-AP MLD. In addition, in this embodiment of this application, each field of the BTM request frame is not changed, and no overheads are increased.

The foregoing content describes in detail the method provided in this application. To facilitate implementation of the foregoing solutions in embodiments of this application, embodiments of this application further provide corresponding apparatuses or devices.

In this application, functional modules of the AP MLD and the non-AP MLD are obtained through division according to the foregoing method embodiments. For example, the functional modules may be obtained through division corresponding to various functions, or two or more functions may be integrated into one processing module. The integrated module may be implemented in a form of hardware, or may be implemented in a form of a software function module. It should be noted that, in this application, module division is an example, and is merely logical function division. In actual implementation, another division manner may be used. The following describes in detail the AP MLD and the non-AP MLD in embodiments of this application with reference to FIG. 19 to FIG. 21.

FIG. 19 is a diagram of a structure of a communication apparatus according to an embodiment of this application. As shown in FIG. 19, the communication apparatus includes a transceiver unit 10 and a processing unit 20. The transceiver unit 10 may implement a corresponding communications function, and the processing unit 20 is configured to perform data processing. For example, the transceiver unit 10 may also be referred to as a communication interface or a communication unit.

In some embodiments of this application, the communication apparatus may be the AP MLD shown above. In other words, the communication apparatus shown in FIG. 19 may be configured to perform steps, functions, and the like performed by the AP MLD in the foregoing method embodiments. For example, the communication apparatus may be the AP MLD or a chip, a function module, or the like configured in the AP MLD. This is not limited in embodiments of this application. The transceiver unit 10 is configured to perform a receiving/sending-related operation of the AP MLD in the foregoing method embodiments. The processing unit 20 is configured to perform a processing-related operation of the AP MLD in the foregoing method embodiments.

For example, the processing unit 20 is configured to generate a BTM request frame. The BTM request frame includes a BSS transition candidate list entries field and first indication information, and the first indication information indicates treatment for a BSSID or an AP MLD not present in the BSS transition candidate list entries field, and treatment for an AP not present in any recommended AP set in a candidate target AP MLD listed in the BSS transition candidate list entries field. The transceiver unit 10 is configured to send or output the BTM request frame.

It may be understood that the transceiver unit 10 may send the BTM request frame to another communication apparatus, or the transceiver unit 10 outputs the BTM request frame from the processing unit 20 to another component, another function module, or the like of the AP MLD. Related descriptions of outputting other information by the transceiver unit are similar. Details are not described below again.

It may be understood that for specific descriptions of the BTM request frame, the BSS transition candidate list entries field, the first indication information, and the like, refer to the foregoing method Embodiment 1 or 2. Details are not described herein again.

It may be understood that specific descriptions of the transceiver unit and the processing unit in this embodiment of this application are merely examples. For specific functions or steps performed by the transceiver unit and the processing unit, refer to the foregoing method Embodiment 1 or 2 (for example, FIG. 9 and FIG. 10). Details are not described herein again.

For example, the processing unit 20 is configured to generate a BTM request frame. The BTM request frame includes a BSS transition candidate list entries field and a request mode field, the request mode field includes an abridged field, and the abridged field indicates treatment for a BSSID or an AP MLD not present in the BSS transition candidate list entries field, and treatment for an AP set that is not recommended in a candidate target AP MLD listed in the BSS transition candidate list entries field. The transceiver unit 10 is configured to send or output the BTM request frame.

It may be understood that for specific descriptions of the BTM request frame, the BSS transition candidate list entries field, the request mode field, the abridged field, and the like, refer to the foregoing method Embodiment 3. Details are not described herein again.

It may be understood that specific descriptions of the transceiver unit and the processing unit in this embodiment of this application are merely examples. For specific functions or steps performed by the transceiver unit and the processing unit, refer to the foregoing method Embodiment 3 (for example, FIG. 12). Details are not described herein again.

For example, the processing unit 20 is configured to generate a BTM request frame. The BTM request frame includes one or more neighbor report elements, one neighbor report element is used to carry information about one candidate target AP MLD, the neighbor report element includes second indication information, and the second indication information indicates treatment for an AP not present in an AP set in the candidate target AP MLD carried in the neighbor report element to which the second indication information belongs. The transceiver unit 10 is configured to send or output the BTM request frame.

It may be understood that for specific descriptions of the BTM request frame, the neighbor report element, the second indication information, and the like, refer to the foregoing method Embodiment 4. Details are not described herein again.

It may be understood that specific descriptions of the transceiver unit and the processing unit in this embodiment of this application are merely examples. For specific functions or steps performed by the transceiver unit and the processing unit, refer to the foregoing method Embodiment 4 (for example, FIG. 13). Details are not described herein again.

For example, the processing unit 20 is configured to generate a BTM request frame. The BTM request frame includes one or more neighbor report elements, one neighbor report element is used to carry information about one candidate target AP MLD, and the neighbor report element includes a per-STA profile subelement of any AP that is not excluded in the candidate target AP MLD. The transceiver unit 10 is configured to send or output the BTM request frame.

It may be understood that for specific descriptions of the BTM request frame, the neighbor report element, the per-STA profile subelement, and the like, refer to the foregoing method Embodiment 5. Details are not described herein again.

It may be understood that specific descriptions of the transceiver unit and the processing unit in this embodiment of this application are merely examples. For specific functions or steps performed by the transceiver unit and the processing unit, refer to the foregoing method Embodiment 5 (for example, FIG. 16). Details are not described herein again.

FIG. 19 is reused. In some other embodiments of this application, the communication apparatus may be the non-AP MLD shown above. In other words, the communication apparatus shown in FIG. 19 may be configured to perform steps, functions, and the like performed by the non-AP MLD in the foregoing method embodiments. For example, the communication apparatus may be the non-AP MLD or a chip, a function module, or the like configured in the non-AP MLD. This is not limited in embodiments of this application. The transceiver unit 10 is configured to perform a receiving/sending-related operation of the non-AP MLD in the foregoing method embodiments. The processing unit 20 is configured to perform a processing-related operation of the non-AP MLD in the foregoing method embodiments.

For example, the transceiver unit 10 is configured to receive or input a BTM request frame. The BTM request frame includes a BSS transition candidate list entries field and first indication information, and the first indication information indicates treatment for a BSSID or an AP MLD not present in the BSS transition candidate list entries field, and treatment for an AP not present in any recommended AP set in a candidate target AP MLD listed in the BSS transition candidate list entries field. The processing unit 20 is configured to parse the BTM request frame.

It may be understood that the transceiver unit 10 may receive the BTM request frame from another communication apparatus, or the transceiver unit 10 inputs the BTM request frame from another component or another function module of the AP MLD. Related descriptions of inputting other information by the transceiver unit are similar. Details are not described below again.

It may be understood that for specific descriptions of the BTM request frame, the BSS transition candidate list entries field, the first indication information, and the like, refer to the foregoing method Embodiment 1 or 2. Details are not described herein again.

It may be understood that specific descriptions of the transceiver unit and the processing unit in this embodiment of this application are merely examples. For specific functions or steps performed by the transceiver unit and the processing unit, refer to the foregoing method Embodiment 1 or 2 (for example, FIG. 9 and FIG. 10). Details are not described herein again.

For example, the transceiver unit 10 is configured to receive or input a BTM request frame. The BTM request frame includes a BSS transition candidate list entries field and a request mode field, the request mode field includes an abridged field, and the abridged field indicates treatment for a BSSID or an AP MLD not present in the BSS transition candidate list entries field, and treatment for an AP set that is not recommended in a candidate target AP MLD listed in the BSS transition candidate list entries field. The processing unit 20 is configured to parse the BTM request frame.

It may be understood that for specific descriptions of the BTM request frame, the BSS transition candidate list entries field, the request mode field, the abridged field, and the like, refer to the foregoing method Embodiment 3. Details are not described herein again.

It may be understood that specific descriptions of the transceiver unit and the processing unit in this embodiment of this application are merely examples. For specific functions or steps performed by the transceiver unit and the processing unit, refer to the foregoing method Embodiment 3 (for example, FIG. 12). Details are not described herein again.

For example, the transceiver unit 10 is configured to receive or input a BTM request frame. The BTM request frame includes one or more neighbor report elements, one neighbor report element is used to carry information about one candidate target AP MLD, the neighbor report element includes second indication information, and the second indication information indicates treatment for an AP not present in an AP set in the candidate target AP MLD carried in the neighbor report element to which the second indication information belongs. The processing unit 20 is configured to parse the BTM request frame.

It may be understood that for specific descriptions of the BTM request frame, the neighbor report element, the second indication information, and the like, refer to the foregoing method Embodiment 4. Details are not described herein again.

It may be understood that specific descriptions of the transceiver unit and the processing unit in this embodiment of this application are merely examples. For specific functions or steps performed by the transceiver unit and the processing unit, refer to the foregoing method Embodiment 4 (for example, FIG. 13). Details are not described herein again.

For example, the transceiver unit 10 is configured to receive or input a BTM request frame. The BTM request frame includes one or more neighbor report elements, one neighbor report element is used to carry information about one candidate target AP MLD, and the neighbor report element includes a per-STA profile subelement of any AP that is not excluded in the candidate target AP MLD. The processing unit 20 is configured to parse the BTM request frame.

It may be understood that for specific descriptions of the BTM request frame, the neighbor report element, the per-STA profile subelement, and the like, refer to the foregoing method Embodiment 5. Details are not described herein again.

It may be understood that specific descriptions of the transceiver unit and the processing unit in this embodiment of this application are merely examples. For specific functions or steps performed by the transceiver unit and the processing unit, refer to the foregoing method Embodiment 5 (for example, FIG. 16). Details are not described herein again.

The foregoing describes the non-AP MLD and the AP MLD in embodiments of this application. The following describes possible product forms of the non-AP MLD and the AP MLD. It should be understood that any product in any form that has the function of the non-AP MLD described in FIG. 19 and any product in any form that has the function of the AP MLD described in FIG. 19 fall within the protection scope of embodiments of this application. It should be further understood that the following descriptions are merely an example, and product forms of the non-AP MLD and the AP MLD in embodiments of this application are not limited thereto.

In a possible implementation, in the communication apparatus shown in FIG. 19, the processing unit 20 may be one or more processors, and the transceiver unit 10 may be a transceiver. Alternatively, the transceiver unit 10 may be a sending unit and a receiving unit. The sending unit may be a transmitter. The receiving unit may be a receiver. The sending unit and the receiving unit are integrated into one device, for example, a transceiver. In embodiments of this application, the processor and the transceiver may be coupled, and a connection manner between the processor and the transceiver is not limited in embodiments of this application. In a process of performing the foregoing method, a process of sending information (for example, sending a BTM request frame) in the foregoing method may be understood as a process of outputting the information by the processor. When outputting the information, the processor outputs the information to a transceiver, so that the transceiver transmits the information. After the information is outputted by the processor, other processing may further need to be performed on the information before the information arrives at the transceiver. Similarly, a process of receiving information (for example, receiving a BTM request frame) in the foregoing method may be understood as a process of receiving the input information by the processor. When the processor receives the input information, the transceiver receives the foregoing information, and inputs the information into the processor. Further, after the transceiver receives the foregoing information, other processing may need to be performed on the information before the information is input into the processor.

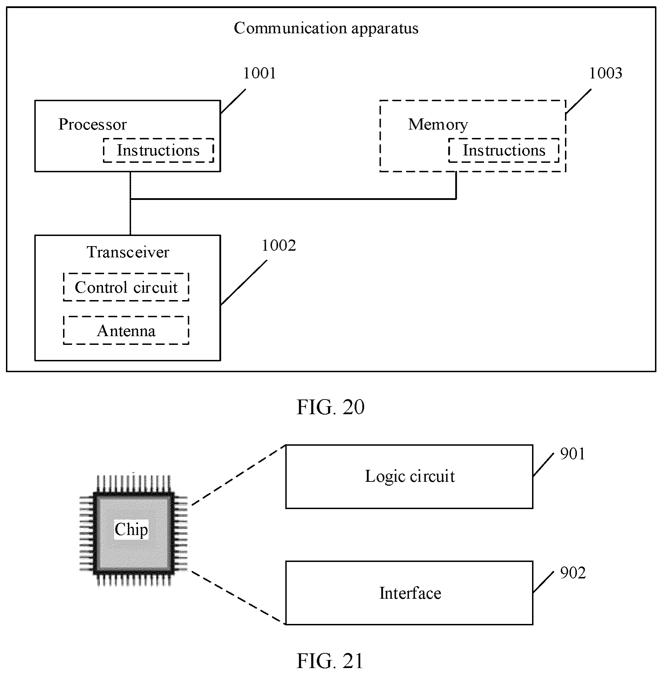

FIG. 20 is a diagram of another structure of a communication apparatus according to an embodiment of this application. The communication apparatus may be an AP MLD or a non-AP MLD, or a chip in the AP MLD or the non-AP MLD. FIG. 20 shows only main components of the communication apparatus. In addition to a processor 1001 and a transceiver 1002, the communication apparatus may further include a memory 1003 and an input/output apparatus (which is not shown in the figure).

The processor 1001 is mainly configured to: process a communication protocol and communication data, control the entire communication apparatus, execute a software program, and process data of the software program. The memory 1003 is mainly configured to store the software program and data. The transceiver 1002 may include a control circuit and an antenna. The control circuit is mainly configured to: perform conversion between a baseband signal and a radio frequency signal, and process the radio frequency signal. The antenna is mainly configured to send and receive a radio frequency signal in a form of an electromagnetic wave. An input/output apparatus, for example, a touchscreen, a display, a keyboard, or the like is mainly configured to: receive data input by a user, and output data to the user.

After the communication apparatus is powered on, the processor 1001 may read the software program in the memory 1003, interpret and execute instructions of the software program, and process the data of the software program. When data needs to be sent in a wireless manner, the processor 1001 performs baseband processing on the to-be-sent data, and outputs a baseband signal to a radio frequency circuit. The radio frequency circuit performs radio frequency processing on the baseband signal, and then sends a radio frequency signal to the outside through the antenna in the form of the electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independently of a processor that performs baseband processing. For example, in a distributed scenario, the radio frequency circuit and the antenna may be remotely disposed independent of the communication apparatus.

The processor 1001, the transceiver 1002, and the memory 1003 may be connected through a communication bus.

For example, the communication apparatus may be configured to perform a function of the AP MLD in Embodiment 1. The processor 1001 may be configured to perform step S101 in FIG. 9, and/or configured to perform another process of the technology described in this specification. The transceiver 1002 may be configured to perform step S102 in FIG. 9, and/or configured to perform another process of the technology described in this specification.

For example, the communication apparatus may be configured to perform a function of the non-AP MLD in Embodiment 1. The processor 1001 may be configured to perform step S103 in FIG. 9, and/or configured to perform another process of the technology described in this specification. The transceiver 1002 may be configured to receive a BTM request frame, and/or configured to perform another process of the technology described in this specification.

For example, the communication apparatus may be configured to perform a function of the AP MLD in Embodiment 2. The processor 1001 may be configured to perform step S201 in FIG. 10, and/or configured to perform another process of the technology described in this specification. The transceiver 1002 may be configured to perform step S202 in FIG. 10, and/or configured to perform another process of the technology described in this specification.

For example, the communication apparatus may be configured to perform a function of the non-AP MLD in Embodiment 2. The processor 1001 may be configured to perform step S203 in FIG. 10, and/or configured to perform another process of the technology described in this specification. The transceiver 1002 may be configured to receive a BTM request frame, and/or configured to perform another process of the technology described in this specification.

For example, the communication apparatus may be configured to perform a function of the AP MLD in Embodiment 3. The processor 1001 may be configured to perform step S301 in FIG. 12, and/or configured to perform another process of the technology described in this specification. The transceiver 1002 may be configured to perform step S302 in FIG. 12, and/or configured to perform another process of the technology described in this specification.

For example, the communication apparatus may be configured to perform a function of the non-AP MLD in Embodiment 3. The processor 1001 may be configured to perform step S303 in FIG. 12, and/or configured to perform another process of the technology described in this specification. The transceiver 1002 may be configured to receive a BTM request frame, and/or configured to perform another process of the technology described in this specification.

For example, the communication apparatus may be configured to perform a function of the AP MLD in Embodiment 4. The processor 1001 may be configured to perform step S401 in FIG. 13, and/or configured to perform another process of the technology described in this specification. The transceiver 1002 may be configured to perform step S402 in FIG. 13, and/or configured to perform another process of the technology described in this specification.

For example, the communication apparatus may be configured to perform a function of the non-AP MLD in Embodiment 3. The processor 1001 may be configured to perform step S403 in FIG. 13, and/or configured to perform another process of the technology described in this specification. The transceiver 1002 may be configured to receive a BTM request frame, and/or configured to perform another process of the technology described in this specification.

For example, the communication apparatus may be configured to perform a function of the AP MLD in Embodiment 5. The processor 1001 may be configured to perform step S501 in FIG. 16, and/or configured to perform another process of the technology described in this specification. The transceiver 1002 may be configured to perform step S502 in FIG. 16, and/or configured to perform another process of the technology described in this specification.

For example, the communication apparatus may be configured to perform a function of the non-AP MLD in Embodiment 5. The processor 1001 may be configured to perform step S503 in FIG. 16, and/or configured to perform another process of the technology described in this specification. The transceiver 1002 may be configured to receive a BTM request frame, and/or configured to perform another process of the technology described in this specification.

For example, the communication apparatus may be configured to perform a function of the AP MLD in Embodiment 6. The processor 1001 may be configured to perform step S601 in FIG. 18, and/or configured to perform another process of the technology described in this specification. The transceiver 1002 may be configured to perform step S602 in FIG. 18, and/or configured to perform another process of the technology described in this specification.

For example, the communication apparatus may be configured to perform a function of the non-AP MLD in Embodiment 3. The processor 1001 may be configured to perform step S603 in FIG. 18, and/or configured to perform another process of the technology described in this specification. The transceiver 1002 may be configured to receive a BTM request frame, and/or configured to perform another process of the technology described in this specification.

In an implementation, the processor 1001 may store instructions. The instructions may be a computer program. The computer program is run on the processor 1001, so that the communication apparatus performs the method described in the foregoing method embodiments. The computer program may be fixed in the processor 1001. In this case, the processor 1001 may be implemented by hardware.

In an implementation, the communication apparatus may include a circuit. The circuit may implement the sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal-oxide-semiconductor (complementary metal-oxide-semiconductor, CMOS), an N-type metal-oxide-semiconductor (N-type Metal-oxide-semiconductor, NMOS), a P-type metal-oxide-semiconductor (P-type metal-oxide-semiconductor, PMOS), a bipolar junction transistor (bipolar junction transistor, BJT), a bipolar CMOS (BiCMOS), silicon germanium (SiGe), and gallium arsenide (GaAs).

It may be understood that the communication apparatus shown in this embodiment of this application may further have more components and the like than those in FIG. 20. This is not limited in this embodiment of this application. The foregoing methods performed by the processor and the transceiver are merely examples. For specific steps performed by the processor and the transceiver, refer to the descriptions in the foregoing method embodiments.

In another possible implementation, in the communication apparatus shown in FIG. 19, the processing unit 20 may be one or more logic circuits, and the transceiver unit 10 may be an input/output interface, or referred to as a communication interface, an interface circuit, an interface, or the like. Alternatively, the transceiver unit 10 may be a sending unit and a receiving unit. The sending unit may be an output interface, and the receiving unit may be an input interface. The sending unit and the receiving unit are integrated into one unit, for example, an input/output interface. FIG. 21 is a diagram of still another structure of a communication apparatus according to an embodiment of this application. As shown in FIG. 21, the communication apparatus shown in FIG. 21 includes a logic circuit 901 and an interface 902. That is, the processing unit 20 may be implemented through the logic circuit 901, and the transceiver unit 10 may be implemented through the interface 902. The logic circuit 901 may be a chip, a processing circuit, an integrated circuit, a system on chip (system on chip, SoC) chip, or the like. The interface 902 may be a communication interface, an input/output interface, a pin, or the like. For example, FIG. 21 is an example in which the foregoing communication apparatus is used as a chip. The chip includes the logic circuit 901 and the interface 902.

In this embodiment of this application, the logic circuit and the interface may be further coupled to each other. A specific connection manner of the logical circuit and the interface is not limited in this embodiment of this application.

In some embodiments of this application, the communication apparatus may be configured to perform methods, steps, functions, or the like performed by the AP MLD in any one of the foregoing method embodiments.

For example, the logic circuit 901 is configured to generate a BTM request frame. The interface 902 is configured to output the BTM request frame.

In some other embodiments of this application, the communication apparatus may be configured to perform methods, steps, functions, or the like performed by the non-AP MLD in any one of the foregoing method embodiments.

For example, the interface 902 is configured to input a BTM request frame. The logic circuit 901 is configured to parse the BTM request frame.

It may be understood that for specific descriptions of the BTM request frame and the like, refer to the foregoing method embodiments. Details are not described herein again.

It may be understood that the communication apparatus shown in embodiments of this application may implement the methods provided in embodiments of this application in a form of hardware, or may implement the methods provided in embodiments of this application in a form of software. This is not limited in embodiments of this application.

For specific implementations of embodiments shown in FIG. 21, refer to the foregoing embodiments. Details are not described herein again.

An embodiment of this application further provides a wireless communication system. The wireless communication system includes a non-AP MLD and an AP MLD. The non-AP MLD and the AP MLD may be configured to perform the method in any one of the foregoing embodiments.

In addition, this application further provides a computer program. The computer program is configured to execute an operation and/or processing performed by the non-AP MLD in the method provided in this application.

This application further provides a computer program. The computer program is configured to execute an operation and/or processing performed by the AP MLD in the method provided in this application.

This application further provides a computer-readable storage medium. The computer-readable storage medium stores computer code. When the computer code is run on a computer, the computer is enabled to execute an operation and/or processing performed by the non-AP MLD in the method provided in this application.

This application further provides a computer-readable storage medium. The computer-readable storage medium stores computer code. When the computer code is run on a computer, the computer is enabled to execute an operation and/or processing performed by the AP MLD in the method provided in this application.

This application further provides a computer program product. The computer program product includes computer code or a computer program. When the computer code or the computer program is run on a computer, an operation and/or processing executed by the non-AP MLD device in the method provided in this application are/is enabled to be executed.

This application further provides a computer program product. The computer program product includes computer code or a computer program. When the computer code or the computer program is run on a computer, an operation and/or processing executed by the AP MLD in the method provided in this application are/is enabled to be executed.

In the several embodiments provided in this application, it should be understood that the disclosed systems, apparatuses, and methods may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on an actual requirement to implement technical effect of the solutions provided in embodiments of this application.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and is sold or used as an independent product, the integrated unit may be stored in a computer-readable storage medium. Based on such an understanding, the technical solutions of embodiments of this application essentially, or the part contributing to the conventional technology, all or some of the technical solutions may be implemented in a form of a software product. The computer software product is stored in a readable-storage medium, and includes several instructions for instructing a computer device (which may be a personal computer, a server, or a network device) to perform all or some of the steps of the methods described in embodiments of this application. The foregoing readable-storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information indication method in basic service set transition management, comprising:
generating, by an access point multi-link device AP MLD, a basic service set transition management BTM request frame, wherein the BTM request frame comprises a basic service set BSS transition candidate list entries field and first indication information, and the first indication information indicates treatment for a basic service set identifier BSSID or an AP MLD not present in the BSS transition candidate list entries field, and treatment for an AP not present in any recommended AP set in a candidate target AP MLD listed in the BSS transition candidate list entries field; and
sending, by the AP MLD, the BTM request frame.

2. An information indication method in basic service set transition management, comprising:
receiving, by a non-access point multi-link device non-AP MLD, a basic service set transition management BTM request frame, wherein the BTM request frame comprises a basic service set BSS transition candidate list entries field and first indication information, and the first indication information indicates treatment for a basic service set identifier BSSID or an AP MLD not present in the BSS transition candidate list entries field, and treatment for an AP not present in any recommended AP set in a candidate target AP MLD listed in the BSS transition candidate list entries field; and
parsing, by the non-AP MLD, the BTM request frame.

3. The method according to claim 1 or 2, wherein the first indication information is an abridged field.

4. The method according to claim 3, wherein that the first indication information indicates treatment for a BSSID or an AP MLD not present in the BSS transition candidate list entries field, and treatment for an AP not present in any recommended AP set in a candidate target AP MLD listed in the BSS transition candidate list entries field comprises:
when the abridged field is of a first value, the abridged field indicates that the AP MLD has no recommendation for or against association with the BSSID or the AP MLD not present in the BSS transition candidate list entries field, and the AP not present in the any recommended AP set in the candidate target AP MLD present in the BSS transition candidate list entries field; and
when the abridged field is of a second value, the abridged field indicates that the AP MLD excludes the association with the BSSID or the AP MLD not present in the BSS transition candidate list entries field, and the AP not present in the any recommended AP set in the candidate target AP MLD present in the BSS transition candidate list entries field.

5. The method according to claim 3 or 4, wherein a BSS transition candidate preference subelement of the BSS transition candidate list entries field comprises a preference preference field, and the preference field indicates a recommendation degree of an AP set in the candidate target AP MLD listed in the BSS transition candidate list entries field.

6. The method according to claim 1 or 2, wherein the first indication information is an abridged field and an abridged extension field, the abridged field indicates the treatment for the BSSID or the AP MLD not present in the BSS transition candidate list entries field, and the abridged extension field indicates the treatment for the AP not present in the any recommended AP set in the candidate target AP MLD listed in the BSS transition candidate list entries field.

7. The method according to claim 6, wherein that the abridged extension field indicates the treatment for the AP not present in the any recommended AP set in the candidate target AP MLD listed in the BSS transition candidate list entries field comprises:
when the abridged extension field is of a third value, the abridged extension field indicates that the AP MLD has no recommendation for or against association with the AP not present in the any recommended AP set in the candidate target AP MLD present in the BSS transition candidate list entries field; and
when the abridged extension field is of a fourth value, the abridged extension field indicates that the AP MLD excludes the association with the AP not present in the any recommended AP set in the candidate target AP MLD present in the BSS transition candidate list entries field.

8. An information indication method in basic service set transition management, comprising:
generating, by an access point multi-link device AP MLD, a basic service set transition management BTM request frame, wherein the BTM request frame comprises a basic service set BSS transition candidate list entries field and a request mode field, the request mode field comprises an abridged field, and the abridged field indicates treatment for an AP set that is not recommended in a candidate target AP MLD listed in the BSS transition candidate list entries field; and
sending, by the AP MLD, the BTM request frame.

9. An information indication method in basic service set transition management, comprising:
receiving, by a non-access point multi-link device non-AP MLD, a basic service set transition management BTM request frame, wherein the BTM request frame comprises a basic service set BSS transition candidate list entries field and a request mode field, the request mode field comprises an abridged field, and the abridged field indicates treatment for an AP set that is not recommended in a candidate target AP MLD listed in the BSS transition candidate list entries field; and
parsing, by the non-AP MLD, the BTM request frame.

10. The method according to claim 8 or 9, wherein that the abridged field indicates treatment for an AP set that is not recommended in a candidate target AP MLD listed in the BSS transition candidate list entries field comprises:
when the abridged field is of a first value, the abridged field indicates that the AP MLD has no recommendation for or against association with the AP set that is not recommended in the candidate target AP MLD present in the BSS transition candidate list entries field; and
when the abridged field is of a second value, the abridged field indicates that the AP MLD excludes the association with the AP set that is not recommended in the candidate target AP MLD present in the BSS transition candidate list entries field.

11. The method according to any one of claims 8 to 10, wherein the abridged field further indicates treatment for a basic service set identifier BSSID or an AP MLD not present in the BSS transition candidate list entries field.

12. The method according to claim 11, wherein that the abridged field further indicates treatment for a basic service set identifier BSSID or an AP MLD not present in the BSS transition candidate list entries field comprises:
when the abridged field is of the first value, the abridged field indicates that the AP MLD has no recommendation for or against association with the BSSID or the AP MLD not present in the BSS transition candidate list entries field; and
when the abridged field is of the second value, the abridged field indicates that the AP MLD excludes the association with the BSSID or the AP MLD not present in the BSS transition candidate list entries field.

13. The method according to any one of claims 8 to 12, wherein a BSS transition candidate preference subelement of the BSS transition candidate list entries field comprises a preference preference field, and the preference field indicates a recommendation degree of an AP set in the candidate target AP MLD listed in the BSS transition candidate list entries field.

14. An information indication method in basic service set transition management, comprising:
generating, by an access point multi-link device AP MLD, a basic service set transition management BTM request frame, wherein the BTM request frame comprises one or more neighbor report elements, one neighbor report element is used to carry information about one candidate target AP MLD, the neighbor report element comprises second indication information, and the second indication information indicates treatment for an AP not present in an AP set in the candidate target AP MLD carried in the neighbor report element to which the second indication information belongs; and
sending, by the AP MLD, the BTM request frame.

15. An information indication method in basic service set transition management, comprising:
receiving, by a non-access point multi-link device non-AP MLD, a basic service set transition management BTM request frame, wherein the BTM request frame comprises one or more neighbor report elements, one neighbor report element is used to carry information about one candidate target AP MLD, the neighbor report element comprises second indication information, and the second indication information indicates treatment for an AP not present in an AP set in the candidate target AP MLD carried in the neighbor report element to which the second indication information belongs; and
parsing, by the non-AP MLD, the BTM request frame.

16. The method according to claim 14 or 15, wherein that the second indication information indicates treatment for an AP not present in an AP set in the candidate target AP MLD carried in the neighbor report element to which the second indication information belongs comprises:
when the second indication information is of a first value, the second indication information indicates that the AP MLD has no recommendation for or against association with the AP not present in the AP set in the candidate target AP MLD carried in the neighbor report element to which the second indication information belongs; and
when the second indication information is of a second value, the second indication information indicates that the AP MLD excludes the association with the AP not present in the AP set in the candidate target AP MLD carried in the neighbor report element to which the second indication information belongs.

17. The method according to any one of claims 14 to 16, wherein the second indication information is carried in a BSS transition candidate preference subelement of the neighbor report element.

18. The method according to claim 17, wherein the BSS transition candidate preference subelement further comprises a preference preference field, a length of the preference field is less than or equal to 7 bits, and the preference field indicates a recommendation degree of the candidate target AP MLD carried in the neighbor report element to which the preference field belongs.

19. The method according to claim 18, wherein a sum of a bit length of the second indication information and the length of the preference field is less than or equal to 1 octet.

20. The method according to any one of claims 14 to 16, wherein the second indication information is carried in a basic service set identifier BSSID information field of the neighbor report element.

21. An information indication method in basic service set transition management, comprising:
generating, by an access point multi-link device AP MLD, a basic service set transition management BTM request frame, wherein the BTM request frame comprises one or more neighbor report elements, one neighbor report element is used to carry information about one candidate target AP MLD, and the neighbor report element comprises a per-STA profile subelement of any AP that is not excluded in the candidate target AP MLD; and
sending, by the AP MLD, the BTM request frame.

22. An information indication method in basic service set transition management, comprising:
receiving, by a non-access point multi-link device non-AP MLD, a basic service set transition management BTM request frame, wherein the BTM request frame comprises one or more neighbor report elements, one neighbor report element is used to carry information about one candidate target AP MLD, and the neighbor report element comprises a per-STA profile subelement of any AP that is not excluded in the candidate target AP MLD; and
parsing, by the non-AP MLD, the BTM request frame.

23. The method according to claim 21 or 22, wherein the per-STA profile subelement further comprises third indication information, and the third indication information indicates treatment for an AP corresponding to the per-STA profile subelement.

24. The method according to claim 23, wherein that the third indication information indicates treatment for an AP corresponding to the per-STA profile subelement comprises:
when the third indication information is of a first value, the third indication information indicates that the AP MLD has no recommendation for or against association with the AP corresponding to the per-STA profile subelement; and
when the third indication information is of a second value, the third indication information indicates that the AP MLD has recommendation for the association with the AP corresponding to the per-STA profile subelement.

25. The method according to claim 23 or 24, wherein the third indication information is carried in a station STA control field of the per-STA profile subelement.

26. A communication apparatus, comprising a unit or a module configured to perform the method according to any one of claims 1 to 25.

27. A communication apparatus, comprising a processor and a memory, wherein
the memory is configured to store instructions; and
the processor is configured to execute the instructions, to enable the method according to any one of claims to 1 to 25 to be performed.

28. A communication apparatus, comprising a logic circuit and an interface, wherein the logic circuit is coupled to the interface, the interface is configured to input and/or output code instructions, and the logic circuit is configured to execute the code instructions, to enable the method according to any one of claims 1 to 25 to be performed.

29. A computer-readable storage medium, wherein the computer-readable storage medium is configured to store a computer program, and when the computer program is executed, the method according to any one of claims 1 to 25 is performed.

30. A communication system, wherein the communication system comprises an AP MLD and a non-AP MLD, the AP MLD is configured to perform the method according to any one of claims 1, 8, 14, and 21, and the non-AP MLD is configured to perform the method according to any one of claims 2, 9, 15, and 22.
